# EUROPÄISCHE PATENTSCHRIFT

(11) **EP 4 257 382 B1**
(45) Veröffentlichungstag und Bekanntmachung des Hinweises auf die Patenterteilung: **12.06.2024**
(21) Anmeldenummer: 23163118.5
(22) Anmeldetag: 21.03.2023
(51) Int. Cl.: B60H 1/00, B60H 1/32

(54) **VERFAHREN ZUM BETREIBEN EINER WÄRMEPUMPE MIT HOCHDRUCKREGELUNG SOWIE EINE HEIZUNGSANLAGE EINES FAHRZEUGS DAZU**
METHOD FOR OPERATING A HEAT PUMP WITH HIGH-PRESSURE REGULATION AND HEATING SYSTEM OF A VEHICLE FOR THIS PURPOSE
PROCÉDÉ DE FONCTIONNEMENT D'UNE POMPE À CHALEUR À RÉGULATION HAUTE PRESSION ET INSTALLATION DE CHAUFFAGE D'UN VÉHICULE À CET EFFET

(30) Priorität: 07.04.2022 DE 102022108475
(43) Veröffentlichungstag der Anmeldung: 11.10.2023
(73) Patentinhaber: Konvekta Aktiengesellschaft, 34613 Schwalmstadt (DE)
(72) Erfinder: Best, Pascal, 34633 Ottrau (DE); Sonnekalb, Michael, 34613 Schwalmstadt (DE); Schmerer, René, 34626 Seigertshausen (DE)
(74) Vertreter: Lindinger, Bernhard

(56) Entgegenhaltungen:
- EP-A1- 3 702 181
- WO-A1-2019/091829
- DE-A1-102019 006 886
- DE-A1-102019 007 978
- GB-A- 2 529 162

## Beschreibung

### Gebiet der Technik:

Die Erfindung betrifft ein Verfahren zum Betreiben einer Wärmepumpe einer Heizungsanlage eines Fahrzeugs gemäß dem Oberbegriff des Anspruchs 1. Dabei zirkuliert ein Kältemittel im Kältemittelkreislauf der Wärmepumpe durch zumindest einen Verdichter, hochdruckseitigen Heiz-Wärmeübertrager, Expansionsorgan und Verdampfer. Das Kältemittel wird auf der Hochdruckseite des Kältemittelkreislaufs überkritisch betrieben. Das Kältemittel ist beispielsweise CO2. Der Hochdruck wird im Kältemittelkreislauf geregelt, was beispielsweise durch ein regelbares Expansionsorgan und/oder einen in der Leistung regelbaren Verdichter geschehen kann. Mit der Änderung des Hochdrucks wird die Temperatur des Kältemittels in einem hochdruckseitigen Heiz-Wärmeübertrager geändert. Ferner betrifft die Erfindung eine Heizungsanlage mit einer gemäß dem Verfahren betreibbaren Wärmepumpe sowie ein Fahrzeug, wie insbesondere ein Elektroomnibus oder Hybridomnibus, damit.

### Stand der Technik:

Bekannt sind Verfahren zum Betreiben einer Wärmepumpe einer Heizungsanlage eines Fahrzeugs, bei denen der Hochdruck im Hochdruckbereich des Kältemittelkreislaufs geregelt wird. So zeigt US2009/0241570 A1 ein Verfahren für eine Fahrzeugheizungsanlage bei dem durch das Steuern des Expansionsventils der Hochdruck im Kältemittelkreislauf gesteuert wird. Es existiert dabei im Kältemittelkreislauf nur ein Heiz-Wärmeübertrager, der lediglich direkt Luft für den Fahrzeuginnenraum heizt, was für den Heizkomfort nachteilig ist. Mit dem dortigen Verfahren soll die Temperatur des Verdichtermotors geregelt werden. Im in WO2005/000609 A1 offenbarten insbesondere zur Verhinderung von Scheibenbeschlag vorgesehenen Verfahren wird der Hochdruck des Kältemittelkreislaufs der Wärmepumpe nicht nur mit dem Expansionsorgan sondern auch mit einem variablen Hubvolumen des Verdichters geregelt. Im in WO2005/016672 A1 gezeigten Verfahren erfolgt das Regeln des Hochdrucks auf die gleiche Weise, wobei eine Solltemperatur für den zu heizenden Fahrzeuginnenraum insbesondere durch Regeln des Hochdrucks anhand einer Vorsteuerkennlinie eines Hochdrucksollwerts erreicht werden soll. Die EP1262347 A2 offenbart ein Verfahren, bei dem der Hochdruck im Kältemittelkreislauf der Wärmepumpe sowohl über den Verdichter als auch über ein einstellbares Expansionsorgan geregelt wird. Aber jeweils verfügt in EP1262347 A2, WO2005/000609 A1 und WO2005/016672 A1 der Kältemittelkreislauf nur über einen Heiz-Wärmeübertrager, der lediglich direkt Luft für den Fahrzeuginnenraum erwärmt, was für den Heizkomfort und die Variabilität des Heizens nachteilig ist. Schwankungen der Temperatur im Fahrzeuginnenraum können mit der Wärmepumpe nur unzureichend schnell ausgeglichen werden. Bei dem in DE102019105035 A1 offenbarten Verfahren wird der Hochdruck über einen regelbaren Verdichter und anlagenseitig durch Kältemittelverlagerung im Kältemittelkreislauf geregelt, wobei jedoch dort nur ein Heiz-Wärmeübertrager im Kältemittelkreislauf gezeigt ist. Der Hochdruck soll im dortigen Verfahren für den Teillastbereich gesenkt werden, was die Kältemitteltemperatur im Heiz-Wärmeübertrager absenkt und sich somit negativ auf die Wärmeleistung auswirkt. Hingegen erwähnt die WO2019/091829 A1 die Möglichkeit, dass im Kältemittelkreislauf der Wärmepumpe auch mehrere hochdruckseitige Heiz-Wärmeübertrager angeordnet sein können. Aber das dortige Verfahren zum Regeln des Hochdrucks über ein regelbares Expansionsorgan betrifft nicht den Heizkomfort und die Variabilität durch mehr als einen Heiz-Wärmeübertrager, sondern die Verbesserung der Effektivität der Heizung durch Vermeidung elektrischen Zuheizens insbesondere beim Stillstand des Fahrzeugs bei dennoch geringer Lautstärke des Verdichtermotors. Einer Verbesserung unter Berücksichtigung des Speicherns von Wärme zeigt das dortige Verfahren nicht. In dem in DE19939028 A1 offenbarten Verfahren zum Betreiben eines Wärmepumpenkreislaufsystems wird der Hochdruck über das Steuern des regelbaren Expansionsorgans und die Drehzahl des Verdichters geregelt. Dabei sind im Kältemittelkreislauf zwei Heiz-Wärmeübertrager in Reihe geschaltet, in denen beiden jedoch vom Kältemittel Wärme direkt an dasselbe Medium, nämlich die zu heizende Luft eines Luftstroms, übertragen wird, wodurch die Wärme des Kältemittels besser im tieferen Temperaturbereich auf der Hochdruckseite genutzt wird und somit der Hochdruck den im Verfahren angestrebten für die Wärmepumpe wirkungsgradoptimierten Wert (Opt-HD) annehmen kann. Jedoch erreicht die Anordnung der beiden Heiz-Wärmeübertrager in einem Luftstrom weder eine Verbesserung des Heizkomforts noch eine verbesserte Variabilität durch mehr als einen Heiz-Wärmeübertrager. Die Leistungsverteilung der jeweils übertragenen Wärmeleistung der beiden Heiz-Wärmeübertrager im in DE19939028 A1 offenbarten Verfahren bleibt bei der Übertragung auf die Luft desselben Luftstroms nachteilig ungenutzt. Einer Verbesserung unter Berücksichtigung des Speicherns von Wärme zeigt das dortige Verfahren nicht. In dem in DE112012001744 T5 offenbarten Verfahren zum Betreiben eines Wärmepumpenkreislaufsystems mit zwei im Kältemittelkreislauf hochdruckseitig in Reihe geschalteten Wärmeübertragern kann der Hochdruck zwar geändert werden, aber das Kältemittel des Kältemittkreislaufs wird hochdruckseitig unterkritisch betrieben und ein Ablesen aus einer Tabelle eines zuvor berechneten wirkungsgradoptimierten Werts (Opt-HD) für den Hochdruck oder die Berechnung dieses Werts sind dort nicht erwähnt.

In dem in EP4052938 A1 offenbarten Verfahren zum Betreiben eines Wärmepumpenkreislaufsystems mit zwei im Kältemittelkreislauf hochdruckseitig in Reihe geschalteten Wärmeübertragern ist weder ein Ablesen aus einer Tabelle eines zuvor berechneten wirkungsgradoptimierten Werts (Opt-HD) für den Hochdruck oder die Berechnung dieses Werts noch ein Verfahrensschritt des Messens des Hochdrucks des Kältemittels offenbart.

In DE102016110443 A1 wird ein Verfahren zur Kältemittelverlagerung in oder aus Bereichen eines Kältemittelkreises, die für den momentanen Betrieb eines Kältemittelkreislauf sonst ungenutzte wären, beschrieben. Ein Ablesen aus einer Tabelle eines zuvor berechneten wirkungsgradoptimierten Werts (Opt-HD) für den Hochdruck oder die Berechnung dieses Werts sind dort nicht erwähnt.

Der im Anspruch 1 angegebenen Erfindung liegt also das Problem zugrunde, dass die bisher bekannten Verfahren zum Betreiben einer Wärmepumpe einer Heizungsanlage für ein Fahrzeug Schwächen insbesondere hinsichtlich Wärmeleistungsaufteilung, Wärmespeicherung und Heizkomfort bei dennoch ausreichend effektiver Nutzung der Wärmepumpe offenbaren. Es ist Aufgabe ein diesbezüglich verbessertes Verfahren zum Betreiben einer Wärmepumpe einer Heizungsanlage für ein Fahrzeug bereitzustellen.

Ein entsprechendes Problem liegt auch der Bereitstellung einer Heizungsanlage eines Fahrzeugs mit einer Wärmepumpe sowie der Bereitstellung eines Fahrzeugs damit zugrunde.

### Zusammenfassung der Erfindung:

Das der im Anspruch 1 angegebenen Erfindung zugrundeliegende Problem wird durch die im Anspruch 1 aufgeführten Merkmale gelöst. Dadurch, dass das Verfahren zum Betreiben einer Wärmepumpe einer Heizungsanlage eines Fahrzeugs für das Heizen von Luft für einen und/oder in einem Fahrzeuginnenraum, wobei die Wärmepumpe einen Kältemittelkreislauf mit zumindest einem Verdichter, einem ersten hochdruckseitigen Heiz-Wärmeübertrager zum Übertragen von Wärme von dem Kältemittel auf ein wärmespeicherfähiges erstes Medium, einem zweiten hochdruckseitigen Heiz-Wärmeübertrager zum Übertragen von Wärme von dem Kältemittel entweder direkt auf zu heizende Luft oder über ein gegebenenfalls zweites Medium indirekt auf zu heizende Luft, einem Expansionsorgan und einem Verdampfer aufweist, wobei der erste Heiz-Wärmeübertrager im Kältemittelkreislauf stromaufwärts des zweiten Heiz-Wärmeübertragers angeordnet ist, sodass die Temperatur des Kältemittels im ersten Heiz-Wärmeübertrager über der im zweiten Heiz-Wärmeübertrager liegt, und das Kältemittel im Kältemittelkreislauf hochdruckseitig überkritisch betrieben wird sowie der Hochdruck im Kältemittelkreislauf regelbar ist, die Schritte erstens des Erfassens eines für die Wärmepumpe wirkungsgradoptimierten Werts (Opt-HD) für den Hochdruck im Kältemittelkreislauf, zweitens des Erhöhens des Hochdrucks im Kältemittelkreislauf über den wirkungsgradoptimierten Wert (Opt-HD) des Hochdrucks, und drittens des Erreichens eines erhöhten Hochdrucks, bei dem die Leistungsverteilung der Übertragung von Wärmeleistung im ersten Heiz-Wärmeübertrager zur Übertragung von Wärmeleistung im zweiten Heiz-Wärmeübertrager einer Soll-Leistungsverteilung entspricht, umfasst, wird das Problem gelöst.

Der für die Wärmepumpe wirkungsoptimierte Wert (Opt-HD) für den Hochdruck im Kältemittelkreislauf ergibt sich aus der für die Heizbedingungen höchsten Leistungszahl COP (Coefficient of Performance) der Wärmepumpe.

Das Erfassen eines für die Wärmepumpe wirkungsgradoptimierten Werts (Opt-HD) kann entweder durch ein Ablesen aus einer gespeicherten Tabelle von in Abhängigkeit der Außenlufttemperatur vorbestimmten wirkungsgradoptimierten Werten oder durch ein Ausrechnen aus den momentanen Heiz- und Anlagenbedingungen erfolgen.

Heiz- und Anlagenbedingungen sind beispielsweise die Art des Kältemittels, die Außenlufttemperatur und die Austrittstemperatur des Kältemittels aus dem zweiten Heiz-Wärmeübertrager.

Die Erfindung hat insbesondere den Vorteil, dass die Verteilung der vom hochdruckseitig überkritisch betrieben Kältemittel übertragenen Wärmeleistung an dem ersten und zweiten Heiz-Wärmeübertrager sich hin zum ersten Heiz-Wärmeübertrager verschiebt. Die Flexibilität des Heizens wird vorteilhaft verbessert. So ist die Temperatur am ersten Heiz-Wärmeübertrager höher als am zweiten Heiz-Wärmeübertrager, was den Einsatz des die Wärme aufnehmenden ersten Mediums flexibler gestaltet. Es können beispielsweise besser den Heizkomfort für die Fahrzeuginsassen erhöhende Konvektoren eingesetzt werden, die mit Temperaturen des ersten Mediums von zum Beispiel über 45 °C laufen. Durch die Wärmespeicherfähigkeit des ersten Mediums lässt sich Wärme für die Abgabe an Luft des Fahrzeuginnenraums speichern, was wegen der auf das erste Medium erhöhten Übertragung von Wärmeleistung schneller und umfangreicher erfolgen kann. Auch wird bei Teillast der Heizungsanlage mit dem erfindungsgemäßen Verfahren ein Überschuss von über das zweite Medium eingebrachter Wärmeleistung zum tatsächlichen Heizbedarf verringert, was eine Überheizung des Fahrzeuginnenraums und damit einem Abschalten der Wärmepumpe entgegenwirkt. Ein energieintensives Heizen des ersten Mediums mit einem Elektroheizer in den Abschaltphasen der Wärmepumpe wird somit verringert. Mit dem Verfahren wird eine höhere Variabilität bei der Leistungsverteilung von Wärmeleistung am ersten und zweiten Heiz-Wärmeübertrager erreicht.

Vorzugsweise ist das erste Medium auch eine Wärmetransportflüssigkeit, wie insbesondere Wasser, die in einem Heizkreislauf zirkuliert, der für das Heizen von Luft für einen und/oder in einem Fahrzeuginnenraum vorgesehen ist. Eine Wärmetransportflüssigkeit wie Wasser hat eine hohe Wärmekapazität und kann hohe Temperaturen über 45 °C gut aufnehmen, ohne dass Fahrzeuginsassen unmittelbar Luft mit derartig hohen Temperaturen ausgesetzt sind. Die über den ersten Heiz-Wärmeübertrager aufgenommene Wärme kann durch die Wärmetransportflüssigkeit im Heizkreislauf gut an verschiedene Stellen des Fahrzeuginnenraums verteilt werden. Besonders von Vorteil ist dabei ein Übertragen von Wärme durch im Heizkreislauf zirkulierende Wärmetransportflüssigkeit in ein oder mehreren Konvektoren und/oder in ein oder mehreren Wärmeübertragern im Dachbereich und/oder Frontbereich des Fahrzeugs an Luft für einen und/oder in einem Fahrzeuginnenraum.

Bevorzugt wird bei dem erfindungsgemäßen Verfahren zumindest ein Teil der am ersten Heiz-Wärmeübertrager vom Kältemittel übertragenen Wärme direkt oder über das erste Medium indirekt auf ein Phasenwechselmaterial umfassendes Wärmespeichermedium eines thermischen Speichers übertragen, sofern dessen Maximum an zu speichernder Wärme nicht erreicht ist und die in dem ersten Heiz-Wärmeübertrager zu übertragene Wärmeleistung momentan nicht vollständig für das Heizen von zu heizender Luft über das erste Medium genutzt werden soll. Damit wird überschüssige Wärme, die im ersten Heiz-Wärmeübertrager vom Kältemittel übertragen wird, in einem thermischen Speicher gespeichert. Denkbar sind auch Wärmespeichermedien, die nicht nur ein, sondern mehrere Phasenwechselmaterialien enthalten. Die Speicherung von Wärme im thermischen Speicher verhindert insbesondere im Teillastbereich der Wärmepumpe eine Überhitzung der Luft des Fahrzeuginnenraums. Wegen des erfindungsgemäß größeren Anteils der im ersten Heiz-Wärmeübertrager übertragenen Wärmeleistung ist dessen Überschuss insbesondere im Teillastbereich größer, sodass vorteilhaft der thermische Speicher schneller mit Wärme aufgeladen werden kann. Dadurch wird vorteilhaft die Laufzeit des Verdichters verkürzt und die Zeit des Heizens mit im thermischen Speicher gespeicherter Wärme verlängert. Dieses verbessert den Heizkomfort und verringert ein Zuheizen mit Elektroheizern während der Auszeiten des Verdichters. Vorzugsweise wird Wärme aus dem thermischen Speicher zum Heizen von Luft für einen und/oder in einem Fahrzeuginnenraum dann freigegeben, wenn die gespeicherte Wärme über einem Minimalwert liegt und gefordert ist, dass mit der Freigabe der gespeicherten Wärme das Heizen durch die Wärmepumpe unterstützt oder ersetzt werden soll.

Vorzugsweise wird bei einer höheren Temperatur des Wärmespeichermediums des thermischen Speichers als eine vorgegebene Maximaltemperatur nur noch Wärme aus dem thermischen Speicher zum Heizen von Luft für einen und/oder in einem Fahrzeuginnenraum freigegeben und der Verdichter der Wärmepumpe wird/bleibt ausgeschaltet.

Dadurch wird ein unnötiges Weiterlaufen des Verdichters trotz bereits überschrittener vorgegebener Maximaltemperatur des thermischen Speichers vermieden, was Energie eingespart.

Gemäß einer vorteilhaften Ausführung des Verfahrens wird die Wärme aus dem thermischen Speicher an das erste Medium abgegeben und über das erste Medium zum Heizen von Luft für einen und/oder in einem Fahrzeuginnenraum transportiert. Auf diese Weise lässt sich die Wärme vom thermischen Speicher gut abführen und an verschiedene Stellen im Fahrzeuginnenraum zum Heizen der Luft einsetzen. Damit ist der Heizkomfort hoch und ein flexibler Einsatz der gespeicherten Wärme zum Heizen von einzelnen Bereichen des Fahrzeuginnenraums ermöglicht. Auch kann durch das erste Medium über den Heizkreislauf mit vorher gespeicherter Wärme gegebenenfalls eine zu heizende Fahrzeugkomponente erwärmt werden.

Von Vorteil ist eine Ausführung des Verfahrens, bei der je geringer der Heizbedarf für den Fahrzeuginnenraum ist, desto größer bei Betrieb der Wärmepumpe der Anteil der im ersten Heiz-Wärmeübertrager vom Kältemittel übertragenen Wärmeleistung ist, dessen Wärme im Wärmespeichermedium des thermischen Speichers gespeichert wird. Wenn der Heizbedarf sinkt, lassen sich damit besonders effektiv die Verdichterlaufzeiten verkürzen.

Vorteilhaft wird bei Betrieb der Wärmepumpe das Kältemittel im ersten Heiz-Wärmeübertrager über einer Temperatur von 45 °C gehalten. Damit ist ein Heizkreislauf mit beispielsweise Wasser als Wärmetransportflüssigkeit effektiv beispielsweise mit Konvektoren für die Erwärmung der Luft im Fahrzeuginnenraum betreibbar. Das dabei als Wärmetransportflüssigkeit eingesetzte erste Medium hat somit eine Austrittstemperatur aus dem ersten Heiz-Wärmeübertrager von über 45 °C. Ferner ist die Wärme bei so hohen Temperaturen gut und im Vergleich zu niedrigeren Temperaturen platzsparend in einem geeigneten thermischen Speicher speicherbar.

Vorzugsweise wird bei Betrieb der Wärmepumpe das Kältemittel am Eintritt des zweiten Heiz-Wärmeübertragers unter einer Temperatur von 50 °C gehalten. Dadurch kann die Wärme am zweiten Heiz-Wärmeübertrager direkt an Luft für den Fahrzeuginnenraum zu für Fahrzeuginsassen erträglichen Temperaturen übertragen werden.

Bevorzugt wird das erfindungsgemäße Verfahren bei der Wärmepumpe im Teillastbereich, also bei Außenlufttemperaturen zwischen - 5 °C und 12 °C, betrieben. Im Teillastbereich ist der Heizbedarf für den Fahrzeuginnenraum nicht so hoch, sodass bei Betrieb die Wärmeleistung der Wärmepumpe einen Überschuss aufweist. Dadurch dass bei dem Verfahren der Anteil der im ersten Heiz-Wärmeübertrager übertragenen Wärmeleistung vergrößert ist, kann schneller überschüssige Wärme mit höherer Temperatur effektiv im thermischen Speicher gespeichert werden, sodass die dort gespeicherte Wärme länger und öfter zum Heizen eingesetzt werden kann, was den Heizkomfort erhöht, die Verdichterlaufzeiten verkürzt und ein energetisch ungünstiges Zuheizen mit Elektroheizern verringert oder sogar ganz entbehrlich macht.

Vorzugsweise wird, wenn die Heizleistung der Wärmepumpe für den Fahrzeuginnenraum über dem Heizbedarf dafür liegt, vorrangig die Leistung des Verdichters verringert und nachrangig, erst wenn die kleineste Leistung des laufenden Verdichters bereits erreicht ist, werden zumindest die Schritte
des Erhöhens des Hochdrucks im Kältemittelkreislauf über den wirkungsgradoptimierten Wert (Opt-HD) des Hochdrucks, und
des Erreichens eines erhöhten Hochdrucks, bei dem die Leistungsverteilung der Übertragung von Wärmeleistung im ersten Heiz-Wärmeübertrager zur Übertragung von Wärmeleistung im zweiten Heiz-Wärmeübertrager einer Soll-Leistungsverteilung entspricht,
durchgeführt. Damit wird bei Teillast möglichst lang der Kältemittelkreislauf mit dem wirkoptimierten Wert (Opt-HD) des Hochdrucks betrieben, was energetisch von Vorteil ist. Eine Wärmepumpe läuft in Teillast, wenn sie nicht in Volllast läuft, weil ihre Heizleistung für den Fahrzeuginnenraum sonst über dem Heizbedarf dafür liegen würde.

Gemäß einer vorteilhaften Ausführung des Verfahrens beträgt bei der Soll-Leistungsverteilung bei Betrieb der Wärmepumpe im Teillastbereich die übertragene Wärmeleistung im ersten Heiz-Wärmeübertrager mindestens 60 %, vorzugsweise mindestens 70 %, der gesamten vom Kältemittel abgegebenen Wärmeleistung. Bei einer derartigen Leistungsverteilung der Wärmeleistung der im ersten und zweiten Heiz-Wärmeübertrager vom Kältemittel übertragenen Wärmeleistung ist die Wärme dieses Überschusses zum momentanen Heizbedarf gut und schnell auf den thermischen Speicher übertragbar. Einer Überhitzung des Fahrzeuginnenraums wird so effektiv entgegengewirkt. Der Heizkomfort ist damit verbessert.

Schließlich können die Merkmale der Unteransprüche für das erfindungsgemäße Verfahren im Wesentlichen frei miteinander und nicht durch die den Ansprüchen vorliegende Reihenfolge festgelegt kombiniert werden, sofern sie unabhängig voneinander sind und sich nicht gegenseitig ausschließen.

Mit einer Heizungsanlage für ein Fahrzeug mit einer Wärmepumpe für das Heizen von Luft für einen und/oder in einem Fahrzeuginnenraum, wobei die Wärmepumpe einen Kältemittelkreislauf mit zumindest einem Verdichter, einem ersten hochdruckseitigen Heiz-Wärmeübertrager zum Übertragen von Wärme von dem Kältemittel auf ein wärmespeicherfähiges erstes Medium, einem zweiten hochdruckseitigen Heiz-Wärmeübertrager zum Übertragen von Wärme von dem Kältemittel entweder direkt auf zu heizende Luft oder indirekt über ein gegebenenfalls zweites Medium auf zu heizende Luft, einem Expansionsorgan und einem Verdampfer aufweist, wobei der erste Heiz-Wärmeübertrager im Kältemittelkreislauf stromaufwärts des zweiten Heiz-Wärmeübertragers angeordnet ist und das Kältemittel im Kältemittelkreislauf hochdruckseitig überkritisch betreibbar ist sowie der Hochdruck im Kältemittelkreislauf regelbar ist, wobei die Heizungsanlage eine Regelung umfasst, die derart zum Steuern der Heizungsanlage ausgebildet ist, dass damit das erfindungsgemäße Verfahren durchführbar ist, wird das dem unabhängigen Anspruch für einer Heizungsanlage zugrundeliegende Problem gelöst. Die Vorteile der Heizungsanlage entsprechen denen für das erfindungsgemäße Verfahren.

Vorzugsweise weist die Heizungsanlage einen an den ersten Heiz-Wärmeübertrager angeschlossenen Heizkreislauf mit dem ersten Medium auch als Wärmetransportflüssigkeit für das Heizen von Luft für einen und/oder in einem Fahrzeuginnenraum auf, wobei der Heizkreislauf eine Pumpe und
ein oder mehrere Konvektoren und/oder
ein oder mehrere Wärmeübertrager für den Dachbereich
und/oder den Frontbereich eines Fahrzeugs umfasst,
und wobei die Regelung derart zum Steuern der Heizungsanlage ausgebildet ist, dass damit das erfindungsgemäße Verfahren durchführbar ist. Die über den ersten Heiz-Wärmeübertrager aufgenommene Wärme kann durch die Wärmetransportflüssigkeit im Heizkreislauf gut an verschiedene Stellen des Fahrzeuginnenraums verteilt werden.

Gemäß einer vorteilhaften Weiterbildung umfasst die Heizungsanlage einen thermischen Speicher vorgesehen und angeordnet zum Speichern von über den ersten Heiz-Wärmeübertrager übertragener Wärme in einem Phasenwechselmaterial umfassendes Wärmespeichermedium, wobei die Regelung derart zum Steuern der Heizungsanlage ausgebildet ist, dass damit ein erfindungsgemäßes Verfahren mit Verwendung des thermischen Speichers durchführbar ist. Die Vorteile einer derartigen Heizungsanlage entsprechen denen für das erfindungsgemäße Verfahren, bei dem der thermische Speicher mit verwendet wird.

Vorzugsweise ist der Verdichter in seiner Leistung hinsichtlich des Regelns des Hochdrucks im Kältemittelkreislauf regelbar und/oder das Expansionsorgan hinsichtlich des Regelns des Hochdrucks im Kältemittelkreislauf regelbar. Dieses sind effektive Mittel zum Regeln des Hochdrucks in einem Kältemittelkreislauf. Alternativ oder kumulativ dazu ist eine vorteilhafte Ausführung der Heizungsanlage derart ausgebildet, dass das Kältemittel im Kältemittelkreislauf zum Regeln des Hochdrucks im Kältemittelkreislauf verlagerbar ist. Dazu ist beispielsweise eine Ausführung mit einem im Füllstand regelbarer Kältemittelsammler oder eine Ausführung, bei der die Nutzung von für den Kältemittelkreislauf momentan nicht benötigter Bereiche des Kältemittelkreislaufs entsprechend regelbar ist, geeignet.

Nach einer vorteilhaften Weiterbildung ist die Heizungsanlage derart ausgebildet, dass sie auch als Klimaanlage zum Kühlen von Luft für einen und/oder in einem Fahrzeuginnenraum betreibbar ist, wobei der Kältemittelkreislauf zwischen Wärmepumpenbetrieb und Klimabetrieb umschaltbar ausgebildet ist. Das erweitert die Verwendungsmöglichkeiten der Heizungsanlage. Eine sonst neben der Heizungsanlage zusätzliche Klimaanlage ist für das Fahrzeug entbehrlich.

Bezüglich weiterer vorteilhafter Ausgestaltungen und Weiterbildungen und deren Vorzüge gelten die obigen Angaben zum erfindungsgemäßen Verfahren entsprechend. Schließlich können die Merkmale der Unteransprüche für die erfindungsgemäße Heizungsanlage im Wesentlichen frei miteinander und nicht durch die den Ansprüchen vorliegende Reihenfolge festgelegt kombiniert werden, sofern sie unabhängig voneinander sind und sich nicht gegenseitig ausschließen.

Mit einem Fahrzeug, wie insbesondere einem Elektroomnibus oder Hybridomnibus, mit einer erfindungsgemäßen Heizungsanlage mit einer nach dem erfindungsgemäßen Verfahren betreibbaren Wärmepumpe wird das dem unabhängigen Anspruch für ein Fahrzeug zugrundeliegende Problem gelöst. Bezüglich vorteilhafter Ausgestaltungen und Weiterbildungen und deren Vorzüge gelten die Angaben zur erfindungsgemäßen Heizungsanlage entsprechend.

### Kurze Beschreibung der Zeichnungen:

Anhand der Zeichnungen werden Ausführungsbeispiele der Erfindung erläutert.

Es zeigen
Fig. 1 eine schematische Darstellung eines Ausführungsbeispiels einer Heizungsanlage mit Wärmepumpe für ein Fahrzeug;
Fig. 2 eine schematische Darstellung eines weiteren Ausführungsbeispiels einer Heizungsanlage mit Wärmepumpe für ein Fahrzeug;
Fig. 3 eine schematische Darstellung eines weiteren Ausführungsbeispiels einer Heizungsanlage mit Wärmepumpe für ein Fahrzeug;
Fig. 4a eine schematische Darstellung eines Ausführungsbeispiels eines Fahrzeugs mit einer ohne das erfindungsgemäße Verfahren betriebenen Heizungsanlage;
Fig. 4b eine schematische Darstellung des in Fig. 4a gezeigten Ausführungsbeispiels eines Fahrzeugs mit einer mit dem erfindungsgemäßen Verfahren betriebenen Heizungsanlage;
Fig. 5 Druck-Enthalpie-Diagramm mit den Zyklen des Kältemittelkreislaufs einer mit und einer ohne das erfindungsgemäße Verfahren betriebenen Wärmepumpe;
Fig. 6 ein Flussdiagramm eines Ausführungsbeispiels eines erfindungsgemäßen Verfahrens; und
Fig. 7 ein Flussdiagramm eines weiteren Ausführungsbeispiels eines erfindungsgemäßen Verfahrens.

### Ausführliche Beschreibung der Erfindung:

Alle Zeichnungen sind schematisch zu verstehen. Auf maßstabsgetreue Abbildungen wurde zum Zwecke erhöhter Klarheit der Darstellung verzichtet.

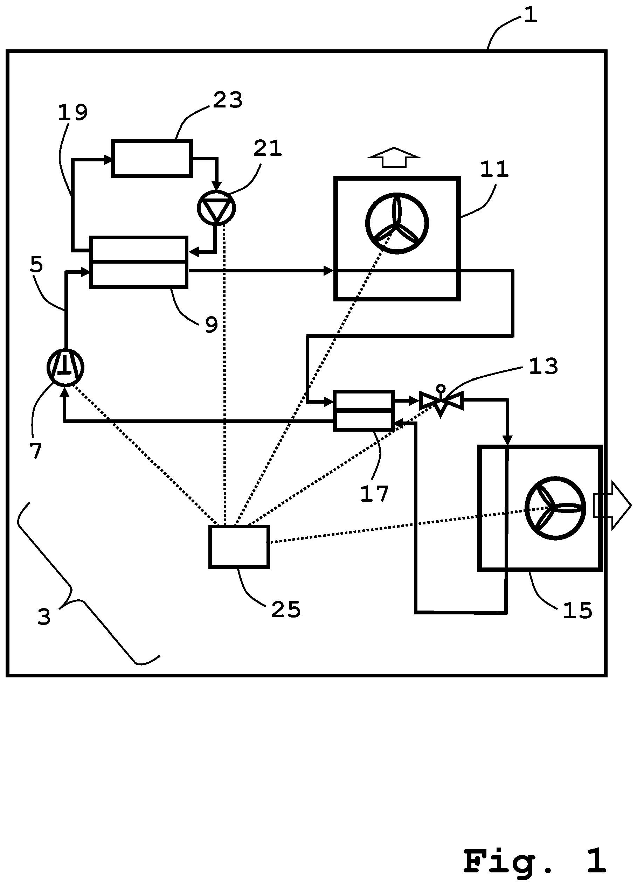

In Figur 1 ist schematisch ein Ausführungsbeispiel einer Heizungsanlage 1 mit Wärmepumpe 3 für ein Fahrzeug dargestellt. Die Heizungsanlage 1 ist für das Heizen von Luft für einen und/oder in einem Fahrzeuginnenraum vorgesehen. Der Kältemittelkreislauf 5 der Wärmepumpe 3 verfügt in Strömungsrichtung des Kältemittels angeordnet über einen Verdichter 7, der das Kältemittel komprimiert, einen ersten hochdruckseitigen Heiz-Wärmeübertrager 9, in dem Wärm von dem Kältemittel auf ein wärmespeicherfähiges erstes Medium übertragbar ist, einen zweiten hochdruckseitigen Heiz-Wärmeübertrager 11, in dem Wärme von dem Kältemittel direkt auf zu heizende Luft übertragbar ist, ein als elektrisch regelbares Expansionsventil ausgebildetes Expansionsorgan 13 und einen als Außenwärmetauscher angeordneten Verdampfer 15. Zur Verbesserung der Effektivität der Wärmepumpe 3 ist optional im Kältemittelkreislauf 5 ein interner Wärmetauscher 17 angeordnet. Das Kältemittel ist auf der Hochdruckseite im Kältemittelkreislauf 5 überkritisch betreibbar. Das Kältemittel ist CO2. Denkbar sind auch andere geeignete überkritisch betreibbare Kältemittel. Der erste und zweite Heiz-Wärmeübertrager 9, 11 sind als Gaskühler ausgebildet wobei der erste Heiz-Wärmeübertrager 9 auf einem höheren Temperaturniveau des Kältemittels als Enthitzer fungiert, und der dazu im Kältemittelkreislauf 5 in Kältemittelströmungsrichtung stromabwärts angeordnete zweite Heiz-Wärmeübertrager 11 auf einem niedrigeren Temperaturniveau des Kältemittels als Nachkühler eingesetzt wird. Der erste Heiz-Wärmeübertrager 9 ist ein Flüssigkeit-Kältemittel-Wärmetauscher in der Ausführung eines Plattenwärmetauschers. Denkbar ist auch eine andere geeignete Art von Heiz-Wärmeübertrager. An den ersten Heiz-Wärmeübertrager 9 ist ferner der Heizkreislauf 19 angeschlossen, dessen wärmespeicherfähiges erstes Medium in diesem Fall Wasser auch als Wärmetransportflüssigkeit eingesetzt wird. Denkbar ist beispielsweise ebenso ein Wasser-Glykol-Gemisch als wärmespeicherfähiges erstes Medium zum Wärmetransport. Im als Plattenwärmetauscher ausgebildeten ersten Heiz-Wärmeübertrager 9 ist das Kältemittel des Kältemittelkreislaufs 5 über eine Wärmetauschverbindung thermisch mit dem Wasser als erstes Medium des Heizkreislaufs 19 gekoppelt. Die beim Heizbetrieb der Heizungsanlage 1 dort von üblicherweise insbesondere nach der Aufwärmphase über 45 °C heißem Kältemittel erhitzte Wärmetransportflüssigkeit Wasser wird im ersten Heizkreislauf 19 mit einer in diesem Fall als regelbare Wasserpumpe ausgebildeten Pumpe 21 umgewälzt und zum Heizen von Luft eines Fahrzeuginnenraums zu Konvektoren 23, die beispielsweise im Bodenbereich eines Fahrzeuginnenraums positionierbar beziehungsweise positioniert sind, transportiert. Vom Kältemittel nimmt dabei im ersten Heiz-Wärmeübertrager 9 das erste Medium Wärme auf und gibt die so in ihm gespeicherte Wärme danach in den Konvektoren 23 zumindest zum Teil an die Luft im Fahrzeuginnenraum wieder ab.

Der zweite Heiz-Wärmeübertrager 11 ist ein Luft-Kältemittel-Wärmetauscher. Er dient zum Heizen von Luft für einen Fahrzeuginnenraum. Er ist beispielsweise im Dachbereich eines Fahrzeuginnenraums positionierbar beziehungsweise positioniert. Die Temperatur des Kältemittels liegt bei Betrieb im zweiten Heiz-Wärmeübertrager 11 im Bereich von 30 °C bis maximal 49 °C.

Hochdruckseitig steht das überkritische Kältemittel CO2 unter hohem Druck von bis zu maximal 120 bar. Durch die hohe Kompression im Verdichter 7 erlangt das komprimierte Kältemittel CO2 am Ausgang des Verdichters 7 eine Temperatur von maximal ca. 150 °C. Der Hochdruck des Kältemittels ist regelbar. Das Regeln des Hochdrucks erfolgt in dieser Ausführung zum einen durch Steuern der Leistung des Verdichters 7 über dessen Drehzahl und/oder dessen Hubvolumen sowie zum anderen über das Regeln der Größe der Durchlassöffnung des Expansionsorgans 13. Denkbar sind auch Hochdruckregelungen, bei denen nur die Größe der Durchlassöffnung des Expansionsorgans 13 oder nur die Leistung des Verdichters 7 geregelt werden. Aber auch eine Ausführung, bei der der Hochdruck über die Menge des Kältemittels im aktiven Bereich des Kältemittelkreislaufs steuerbar ist, stellt eine geeignete Variante dar.

Mit der Regelung 25 wird die Leistung des Verdichters 7, die Pumpleistung der Pumpe 21 des Heizkreislaufs 19, die Luftfördereinrichtung zum zweiten Heiz-Wärmeübertrager 11, das elektrisch regelbare Expansionsorgan 13 sowie die Luftfördereinrichtung des Verdampfers 15 als Außenwärmetauscher gesteuert. Bei Betrieb der Heizungsanlage 1 empfängt die Regelung 25 die Daten zur Bestimmung des Heizbedarfs, wie insbesondere die Temperatur der Außenluft von einem Außenlufttemperatursensor und die Temperatur der Innenluft von einem Temperatursensor im Fahrzeuginnenraum sowie der Solltemperatur der Luft des Fahrzeuginnenraums. Mit der Regelung 25 wird der für die Wärmepumpe 3 wirkungsoptimierte Wert (Opt-HD) für den Hochdruck im Kältemittelkreislauf 5 in der Weise erfasst, dass er aus einer Tabelle bestimmt wird. Dieser ergibt sich aus der für die Heizbedingungen höchsten Leistungszahl COP (Coefficient of Performance) der Wärmepumpe 3. Das Bestimmen des wirkungsgradoptimierten Werts (Opt-HD) erfolgt durch ein Ablesen aus einer gespeicherten Tabelle von für jeweilige Außenlufttemperatur vorbestimmten wirkungsgradoptimierten Werten. Denkbar ist auch eine Ausführung, bei der die Erfassung beziehungsweise Bestimmung des wirkungsgradoptimierten Werts (Opt-HD) durch ausrechnen aus den momentanen Heiz- und Anlagenbedingungen erfolgt.

Der Hochdruck des Kältemittels wird mittels eines in der Hochdruckseite des Kältemittelkreislaufs 5 angeordneten Drucksensors gemessen. Die Temperatursensoren und der Drucksensor sind in Figur 1 aus Gründen der Übersichtlichkeit nicht dargestellt. Die Regelung 25 erhöht durch entsprechendes Steuern der Leistung des Verdichters 7 und der Größe der Durchlassöffnung des elektrisch regelbaren Expansionsorgans 13 erfindungsgemäß den Hochdruck des Kältemittels auf der Hochdruckseite des Kältemittelkreislaufs 5 so weit über den wirkoptimierten Wert (Opt-HD) bis dieser einen Wert erreicht, bei dem die Leistungsverteilung der Übertragung von Wärmeleistung im ersten Heiz-Wärmeübertrager 9 zur Übertragung von Wärmeleistung im zweiten Heiz-Wärmeübertrager 11 einer Soll-Leistungsverteilung, wie beispielsweise 60 % zu 40 %, entspricht. Bei Erhöhung des Hochdrucks über den wirkoptimierten Wert (Opt-HD) verringert sich zwar die Leistungszahl COP der Wärmepumpe 3 aber der Anteil der Übertragung von Wärmeleistung im ersten Heiz-Wärmeübertrager 9 erhöht sich, denn der Wärmeleistungsanteil der vom Kältemittel abgegebenen Wärmeleistung, bei dem die Temperatur des Kältemittels üblicherweise insbesondere nach der Aufwärmphase über 45 °C liegt und somit im ersten Heiz-Wärmeübertrager 9 übertragen wird, erhöht sich. Der Anteil der auf das wärmespeicherfähige erste Medium übertragenen Wärmeleistung, die danach zumindest zum Teil weiter über die Konvektoren 23 an die Luft im unteren Bereich des Fahrzeuginnenraums abgegebenen wird, ist somit im Vergleich zu dem der im zweiten Heiz-Wärmeübertrager 11 an die zu heizende Luft abgegebenen Wärmeleistung erhöht, was einen höheren Heizkomfort zur Folge hat.

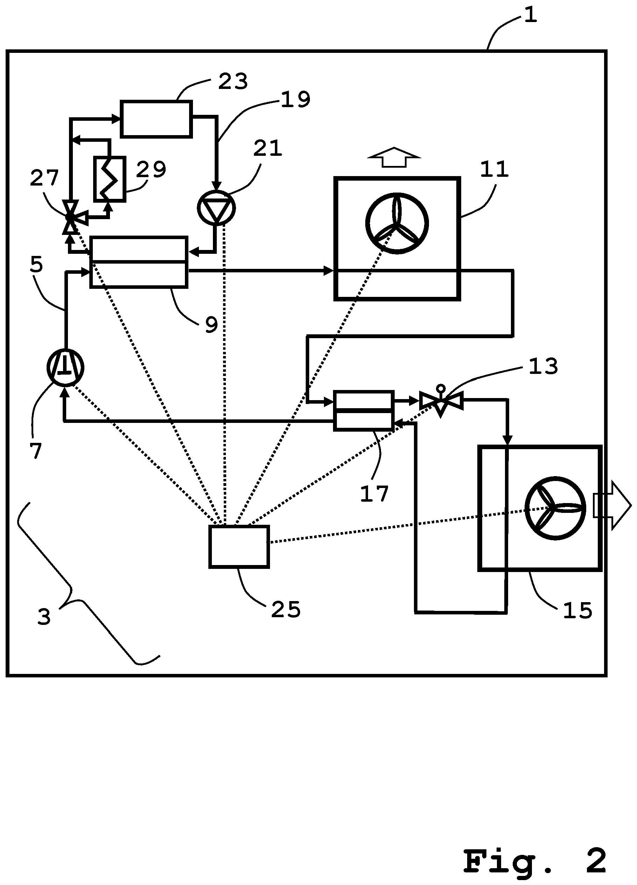

In Figur 2 ist ein weiteres Ausführungsbeispiel einer Heizungsanlage 1 mit Wärmepumpe 3 schematisch für ein Fahrzeug zum Heizen von Luft für einen und/oder in einem Fahrzeuginnenraum dargestellt. Diese Heizungsanlage 1 entspricht der in Figur 1 gezeigten mit Kältemittel und wärmespeicherfähigem erstem Medium versehenen Heizungsanlage 1 bis auf die Ergänzung des mit dem von der Regelung 25 regelbaren Dreiwegeventil 27 im Heizkreislauf 19 zuschaltbaren thermischen Speichers 29. Die in Figur 2 gezeigte Heizungsanlage 1 enthält also sämtliche Komponenten der in Figur 1 dargestellten Heizungsanlage 1, die auch mit denselben Bezugszeichen gekennzeichnet sind. Der thermische Speicher 29 hat ein Wärmespeichermedium, das ein Phasenwechselmaterial wie beispielsweise ein geeignetes Paraffin umfasst.

Denkbar ist auch ein Wärmespeichermedien, das nicht nur ein sondern mehrere Phasenwechselmaterialien enthält, wie zum Beispiel ein geeignetes Paraffin und ein geeigneter Zuckeralkohol. Im Wärmespeichermedium des thermischen Speichers 29 ist die im ersten Heiz-Wärmeübertrager 9 vom Kältemittel an das erste Medium des Heizkreislaufs 19 übertragene Wärme speicherbar. Somit kann insbesondere im Teillastbereich ein Teil der bei Betrieb im ersten Heiz-Wärmeübertrager 9 übertragenen Wärmeleistung an den thermischen Speicher 29 zum Speichern abgegeben werden, der bei erhöhtem Anteil der im ersten Heiz-Wärmeübertrager 9 übertragenen Wärmeleistung entsprechend größer ist. Dieser Anteil lässt sich erfindungsgemäß durch die Erhöhung des Hochdrucks des Kältemittels auf der Hochdruckseite des Kältemittelkreislaufs 5 über den erfassten wirkoptimierten Wert (Opt-HD) des Hochdrucks auf den vorgesehenen Anteil der Soll-Leistungsverteilung erhöhen, sodass der thermische Speicher 29 schneller mit Wärme beladbar ist. Diese Erhöhung des Hochdrucks über den wirkoptimierten Wert (Opt-HD) des Hochdrucks bis zum Erreichen der Soll-Leistungsverteilung von erstem Heiz-Wärmeübertrager 9 und zweitem Heiz-Wärmeübertrager 11 erfolgt bei Teillast, also wenn die Heizleistung der Wärmepumpe 3 für den Fahrzeuginnenraum über dem Heizbedarf dafür liegt, nachrangig zur Verringerung der Leistung des Verdichters 7 der Wärmepumpe 3. Erst wenn die Heizleistung der Wärmepumpe 3 für den Fahrzeuginnenraum bei kleinster Leistung des laufenden Verdichters 7 noch über dem Heizbedarf für den Fahrzeuginnenraum liegt, werden die Verfahrensschritte mit Erhöhung des Hochdrucks bis zum Erreichen der Soll-Leistungsverteilung durchgeführt.

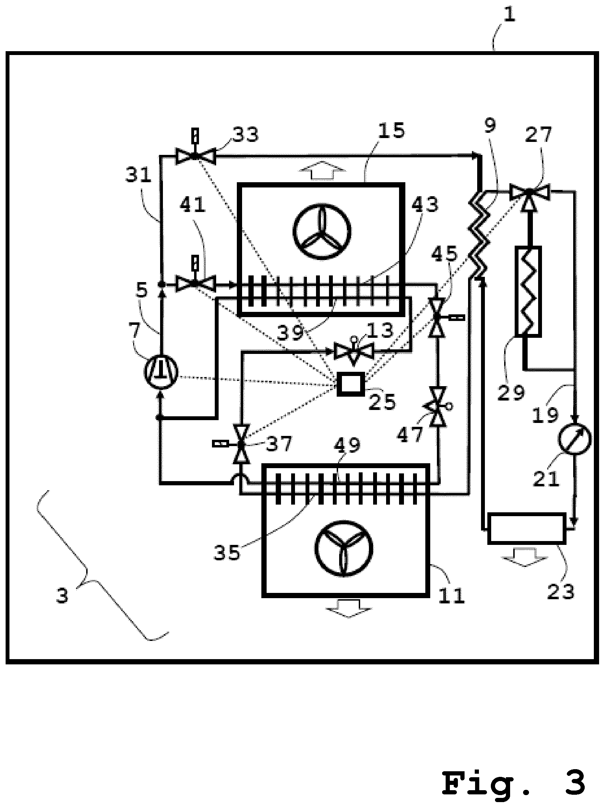

In Figur 3 ist ein weiteres Ausführungsbeispiel einer Heizungsanlage 1 mit Wärmepumpe 3 schematisch für ein Fahrzeug zum Heizen von Luft für einen und/oder in einem Fahrzeuginnenraum gezeigt. Der Kältemittelkreislauf 5 der Wärmepumpe 3 ist zwischen Wärmepumpenbetrieb und Klimabetrieb umschaltbar ausgebildet, sodass die Heizungsanlage 1 auch als Klimaanlage zum Kühlen von Luft für einen und/oder in einem Fahrzeuginnenraum betreibbar ist. Dafür werden der erste und zweite Heiz-Wärmeübertrager 9, 11 im Wärmepumpenbetrieb als Gaskühler und der zweite Wärmeübertrager 11 im Klimabetrieb als Verdampfer eingesetzt. Im Wärmepumpenbetrieb ist das Absperrventil 41 geschlossen und das weitere Absperrventil 33 geöffnet, sodass der Wärmepumpenzweig 31 des Kältemittelkreislaufs 5 geöffnet ist. Bei Betrieb der Wärmepumpe 3 strömt vom Verdichter 7 das komprimierte heiße Kältemittel durch den ersten Heiz-Wärmeübertrager 9, der als Flüssigkeit-Kältemittel-Wärmetauscher ausgebildet ist, und darauf durch den Gaskühlerbereich 35 des zweiten

Heiz-Wärmeübertragers 11, der als Luft-Kältemittel-Wärmetauscher ausgebildet ist, und weiter durch das weitere Absperrventil 37 zum als Expansionsventil ausgebildeten Expansionsorgan 13, wo das Kältemittel entspannt wird und sich abkühlt. Vom Expansionsorgan 13 strömt das entspannte Kältemittel durch den Verdampferbereich 35 des Außenwärmetauschers 15 zum Einlass des Verdichters 7. Das Kältemittel ist CO2, das auf der Hochdruckseite des Kältemittelkreislaufs 5 überkritisch betrieben wird. Denkbar sind auch andere geeignete Arten von überkritisch betreibbaren Kältemitteln. Die Kältemittelleitungen der Hochdruckseite weisen für den überkritischen Betrieb eine ausreichende Druckfestigkeit auf.

An den in diesem Ausführungsbeispiel als Plattenwärmetauscher ausgebildeten ersten Heiz-Wärmeübertrager 9 ist auch ein Heizkreislauf 19, in dem Wasser als erstes Medium für den Wärmetransport zirkuliert, angeschlossen. Im ersten Heiz-Wärmeübertrager 9 überträgt das Kältemittel bei Betrieb der Wärmepumpe 3 Wärme auf das diese zwischenspeichernde erste Medium des Heizkreislaufs 19. Die als Wasserpumpe ausgebildete Pumpe 21 lässt das erste Medium mit der zwischengespeicherten Wärme im Heizkreislauf 19 zirkulieren, sodass bei entsprechendem Heizbedarf in den Konvektoren 23 die Luft des Fahrzeuginnenraums damit heizbar ist. Im Heizkreislauf 19 kann das regelbare Dreiwegeventil 27 so geschaltet werden, dass ganz oder teilweise das im ersten Heiz-Wärmeübertrager 9 erwärmte erste Medium zu einem thermischen Speicher 29 geleitet wird, um dort im ersten Medium zwischengespeicherte Wärme an ein Wärmespeichermedium des thermischen Speichers 29 zu übertragen. Das Wärmespeichermedium umfasst ein Phasenwechselmaterial. Dieses ist ein für den Temperaturbereich geeignetes Paraffin, oder ein anderes geeignetes Material wie beispielsweise ein Zuckeralkohol. Denkbar ist auch ein Wärmespeichermedium mit zwei oder mehr Phasenwechselmaterialien. Bei Bedarf ist die im thermischen Speicher 29 gespeicherte Wärme wieder an das erste Medium und weiter durch die Konvektoren 23 an die Luft des Fahrzeuginnenraums übertragbar.

Der Hochdruck des Kältemittels auf der Hochdruckseite des im Wärmepumpenbetrieb geschalteten Kältemittelkreislaufs 5 wird von der Regelung 25 einerseits über die Drehzahl des Verdichters 7 und andererseits über die Menge des Kältemittels im gerade aktiven Teil des Kältemittelkreislaufs 5 geregelt. Die Regelung 25 steuert über die vier Absperrventile 33, 37, 41, 45 die Verlagerung von Kältemittel. Es kann bei entsprechender Schaltung der Absperrventile 33, 37, 41, 45 Kältemittel im gerade nicht für den Kältemittelstrom benötigten Gaskühlerbereich 35 oder 43 gespeichert oder freigegeben werden, also dem gerade aktiven Teil des Kältemittelkreislaufs zugeführt oder entzogen werden. Im Wärmepumpenbetrieb werden entsprechend der geforderten Menge an Kältemittel auf der Hochdruckseite des aktiven Teils des Kältemittelkreislaufs 5 die Absperrventile 41 und 45 für die Befüllung oder Entleerung des sonst ungenutzten Gaskühlerbreichs 43 des als Verdampfer 15 laufenden Außenwärmetauscher mit der Regelung 25 gesteuert. Denkbar ist auch eine Ausführung, bei der die beiden Expansionsorgane 13 und 47 vollständig absperrbar sind, sodass sie auch die Funktion der beiden Absperrventile 37 und 45 haben und somit diese ersetzen. Bei Vergrößerung der Menge an Kältemittel auf der Hochdruckseite des Kältemittelkreislaufs 5 erhöht sich dort der Hochdruck des Kältemittels.

Unter anderem aus der Außenlufttemperatur und der Solltemperatur des Fahrzeuginnenraums erfasst die Regelung 25 durch entsprechendes Ausrechnen den für die Wärmepumpe 3 wirkungsgradoptimierten Wert (Opt-HD) für den Hochdruck auf der Hochdruckseite des Kältemittelkreislaufs 5. Dieser Wert (Opt-HD) ergibt sich aus der für die Heizbedingungen höchsten Leistungszahl COP der Wärmepumpe 3. Denkbar ist auch eine Ausführung, bei der der wirkungsoptimierte Wert (Opt-HD) des Hochdrucks für Heizbedingungen wie insbesondere die Außenlufttemperatur vorbestimmt in einer gespeicherten Tabelle abgelegt ist und der wirkungsoptimierte Wert (Opt-HD) durch Ablesen aus der Tabelle erfasst wird. Es kann insbesondere im Teillastbereich ein Teil der bei Betrieb im ersten Heiz-Wärmeübertrager 9 übertragenen Wärmeleistung an den thermischen Speicher 29 zum Speichern abgegeben werden, der bei erhöhtem Anteil der im ersten Heiz-Wärmeübertrager 9 übertragenen Wärmeleistung entsprechend größer ist. Dieser Anteil lässt sich erfindungsgemäß durch die Erhöhung des Hochdrucks des Kältemittels auf der Hochdruckseite des Kältemittelkreislaufs 5 über den erfassten wirkoptimierten Wert (Opt-HD) des Hochdrucks auf den vorgesehenen Anteil der Soll-Leistungsverteilung erhöhen, sodass der thermische Speicher 29 schneller mit Wärme beladbar ist. Diese Erhöhung des Hochdrucks erfolgt bei Teillast nachrangig zur Verringerung der Leistung des Verdichters 7. Erst wenn die Heizleistung der Wärmepumpe 3 für den Fahrzeuginnenraum bei kleinster Leistung des laufenden Verdichters 7 noch über dem Heizbedarf für den Fahrzeuginnenraum liegt, werden die Verfahrensschritte mit Erhöhung des Hochdrucks bis zum Erreichend der Soll-Leistungsverteilung durchgeführt.

Wenn jedoch das Wärmespeichermedium des thermischen Speichers 29 eine höhere Temperatur als eine vorgegebene Maximaltemperatur von beispielsweise vorgegeben 65 °C aufweist, wird nur noch Wärme aus dem thermischen Speicher 29 zum Heizen von Luft für den Fahrzeuginnenraum freigegeben und der Verdichter 7 der Wärmepumpe 3 wird/bleibt ausgeschaltet.

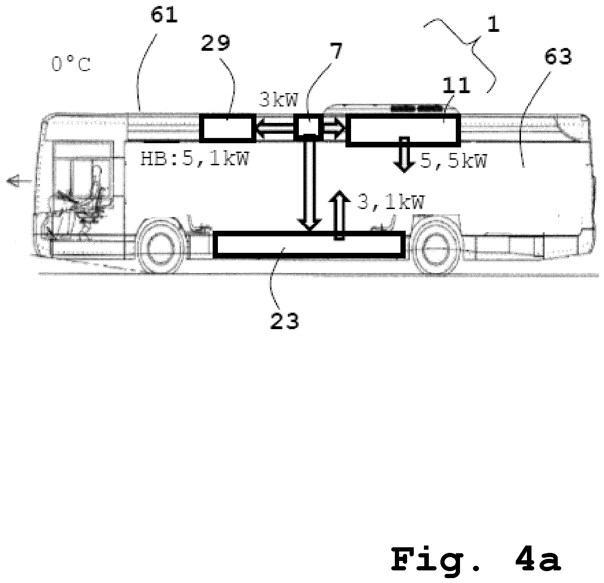

Figur 4a zeigt schematisch ein Ausführungsbeispiel eines Fahrzeugs 61 mit einer Heizungsanlage 1, deren Wärmepumpe bei 0 °C Außenlufttemperatur im Teillastbereich betrieben wird, bei der der wirkungsgradoptimierte Wert (Opt-HD) für den Hochdruck des Kältemittels CO2 eingestellt ist und die dazu optimale Leistungszahl COP 2,63 beträgt. Die Heizungsanlage 1 ist beispielsweise die in Figur 2 oder die in Figur 3 gezeigte. Das Fahrzeug 61 ist in diesem Fall ein Elektroomnibus oder Hybridomnibus mit einem für die Heizbedingungen gegebenen Heizbedarf (HB) von 5,1kW. Mit der Kompression durch den Verdichters 7 wird ein Hochdruck von 86 bar beim Kältemittel erzeugt. Der Verdichter 7 läuft dabei bereits mit seiner geringsten Drehzahl also mit seiner niedrigsten Leistung. Damit wird im ersten Heiz-Wärmeübertrager vom Kältemittel eine Wärmeleistung in Höhe von 6,1kW an das erste Medium übertragen, wovon 3kW an das Wärmespeichermedium des thermischen Speichers 29 übertragen werden und 3,1kW auf die Konvektoren 23 zum Heizen der Luft im Fahrzeuginnenraum 63 entfallen. Beim Verlassen des ersten Heiz-Wärmeübertragers hat das Kältemittel eine vorgesehene Temperatur von 47,5 °C. Im zweiten Heiz-Wärmeübertrager 11, der ein Luft-Kältemittel-Wärmetauscher im Dachbereich des Fahrzeugs 61 ist, wird vom Kältemittel direkt eine Wärmeleistung von 5,5kW an Luft für den Fahrzeuginnenraum 63 abgegeben. Die Temperatur des Kältemittels sinkt dabei im zweiten Heiz-Wärmeübertrager 11 von 47,5 °C auf 37,5 °C.

Die Überschussleistung von insgesamt 3,5 kW bei diesem Teillastbereich heizt die Luft des Fahrzeuginnenraums 63 stark auf, sodass wegen schneller Überhitzung der Verdichter 7 nach 17 Minuten Laufzeit abgeschaltet werden muss. In dieser Zeit erreicht der thermische Speicher 29, dessen Speicherkapazität in diesem Ausführungsbeispiel 2 kWh beträgt, einen Ladezustand von 43%, was eine Entladezeit von nur 10 Minuten bedeutet. Dieses ist eine schlechte Wärmeverteilung mit einem zu hohen Anteil von im zweiten Heiz-Wärmeübertrager 11 direkt an Luft für den Fahrzeuginnenraum 63 übertragener Wärmeleistung und einem zu niedrigen Anteil von im ersten Heiz-Wärmeübertrager für den thermischen Speicher 29 vom Kältemittel übertragener Wärmeleistung.

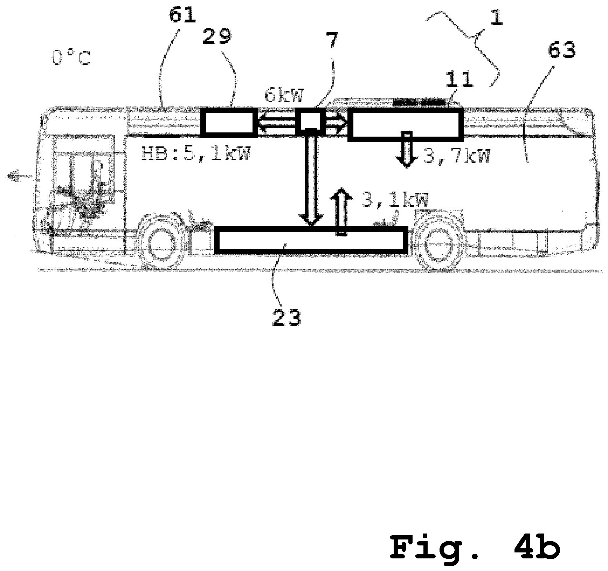

In Figur 4b ist für dasselbe Fahrzeug 61 im Teillastbereich mit demselben Heizbedarf von 5,1 kW bei 0 °C Außenlufttemperatur wie bei Figur 4a die Leistungsverteilung der Heizungsanlage 1 bei erfindungsgemäß über den wirkungsgradoptimierten Wert (Opt-HD) des Hochdrucks auf erhöhten Hochdruck des Kältemittels CO2 auf der Hochdruckseite des Kältemittelkreislaufs dargestellt. Der erhöhte Hochdruck des Kältemittels beträgt 100 bar. Der Verdichter 7 läuft dabei mit seiner geringsten Drehzahl also mit seiner niedrigsten Leistung. Der erhöhte Hochdruck wird in diesem Fall durch Erhöhung der Menge von Kältemittel im aktiven Kältemittelkreislauf bewirkt. Die Leistungsverteilung der Übertragung von Wärmeleistung im ersten Heiz-Wärmeübertrager zur Übertragung von Wärmeleistung im zweiten Heiz-Wärmeübertrager 11 entspricht der in diesem Fall angestrebten Soll-Leistungsverteilung von 71,1 % zu 28,9 %. Damit wird im ersten Heiz-Wärmeübertrager vom Kältemittel eine Wärmeleistung in Höhe von 9,1kW an das erste Medium übertragen, wovon 6kW an das Wärmespeichermedium des thermischen Speichers 29 übertragen werden und 3,1kW auf die Konvektoren 23 zum Heizen der Luft im Fahrzeuginnenraum 63 entfallen. Beim Verlassen des ersten Heiz-Wärmeübertragers hat das Kältemittel eine vorgesehene Temperatur von 47,5 °C. Im zweiten Heiz-Wärmeübertrager 11 wird vom Kältemittel direkt eine Wärmeleistung von 3,7kW an Luft für den Fahrzeuginnenraum 63 abgegeben. Die Temperatur des Kältemittels sinkt dabei im zweiten Heiz-Wärmeübertrager 11 von 47,5 °C auf 37,5 °C.

Die Überschussleistung von insgesamt 1,7 kW heizt die Luft des Fahrzeuginnenraums 63 langsamer auf, sodass wegen Überhitzung der Verdichter 7 erst nach 35 Minuten Laufzeit abgeschaltet werden müsste. Jedoch erreicht der thermische Speicher 29, dessen Speicherkapazität in diesem Ausführungsbeispiel 2 kWh beträgt, einen Ladezustand von 100% bereits nach 20 Minuten, sodass der Verdichter 7 bereits dann abgeschaltet werden kann. Der zu 100% geladene thermische Speicher 29 hat bei den Heizbedingungen bei ausgeschaltetem Verdichter 7 eine Entladezeit von 24 Minuten. Dieses ist eine deutlich besserer Leistungsverteilung der Wärmeleistung mit geringerer Überschussleistung bei Betrieb des Verdichters und besserer Speichernutzung des thermischen Speichers 29 als bei der in Figur 4a gezeigten Einstellung der Heizungsanlage 1. Die zwar etwas geringere Effizienz des Kälteprozesses mit einer Leistungszahl COP von 2,46 wegen des um 14 bar über den wirkungsoptimierten Wert (Opt-HD) des Hochdrucks erhöhten Hochdrucks des Kältemittel auf der Hochdruckseite des Kältemittelkreislaufs bewirkt eine deutlich optimierte Wärmeverteilung und Speichernutzung der Heizungsanlage 1.

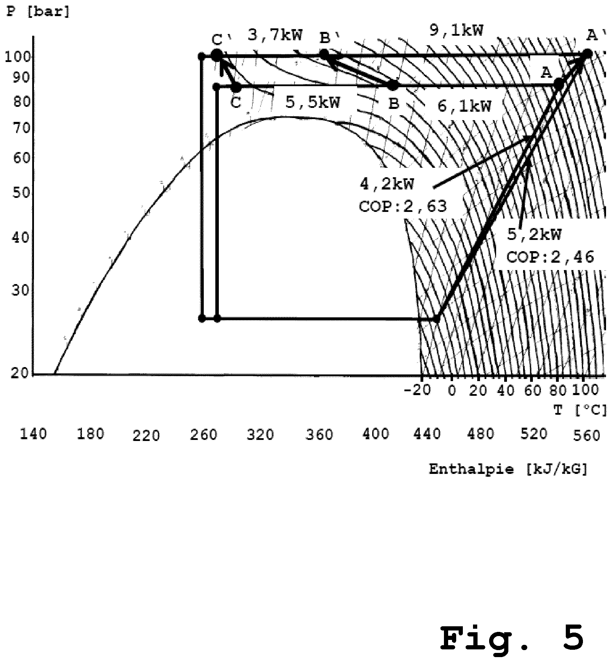

In Figur 5 sind im Druck-Enthalpie-Diagramm die beiden Zyklen der Kälteprozesse der Wärmepumpe der Heizungsanlage von den in den Figuren 4a und 4b gezeigten Einstellungen der Wärmepumpe dargestellt. Die Heizungsanlage ist beispielsweise derart wie in Figur 2 oder 3 gezeigt. Bei dem zu Figur 4a passenden Kälteprozess mit einer optimalen Leistungszahl COP von 2,63 wird bei der Kompression des Kältemittels CO2 auf einen Hochdruck von 86 bar zum Punkt A eine Leistung von 4,2kW eingebracht. Die im ersten Heiz-Wärmeübertrager vom Kältemittel übertragene Wärmeleistung in Höhe von 6,1kW erfolgt vom Punkt A zum Punkt B bei gleichbleibendem Hochdruck. Die Kältemitteltemperatur T am Punkt B beträgt 47,5 °C.

Die weitere hochdruckseitige Übertragung von Wärmeleistung vom Kältemittel in Höhe von 5,5kW erfolgt von Punkt B zum Punkt C, wo die Kältemitteltemperatur T nur noch 37,5 °C beträgt. Dieses ist die im zweiten Heiz-Wärmeübertrager direkt an die Luft für den Fahrzeuginnenraum übertragene Wärmeleistung.

Bei dem zu Figur 4b passenden Kälteprozess mit einem erhöhten Hochdruck von 100 bar und Leistungszahl COP von 2,46 wird bei der Kompression des Kältemittels CO2 auf den erhöhten Hochdruck zum Punkt A` eine Leistung von 5,2kW eingebracht. Die im ersten Heiz-Wärmeübertrager vom Kältemittel übertragene Wärmeleistung in Höhe von 9,1kW erfolgt vom Punkt A` zum Punkt B` bei gleichbleibendem Hochdruck. Die Kältemitteltemperatur T am Punkt B` beträgt 47,5 °C.

Die weitere hochdruckseitige Übertragung von Wärmeleistung vom Kältemittel in Höhe von 3,7kW erfolgt von Punkt B` zum Punkt C`, wo die Kältemitteltemperatur T nur noch 37,5 °C beträgt. Dieses ist die im zweiten Heiz-Wärmeübertrager direkt an die Luft für den Fahrzeuginnenraum übertragene Wärmeleistung.

In beiden dargestellten Zyklen der Kälteprozesse der Wärmepumpe wird auf der Hochdruckseite des Kältemittelkreislaufs das Kältemittel CO2 überkritisch betrieben.

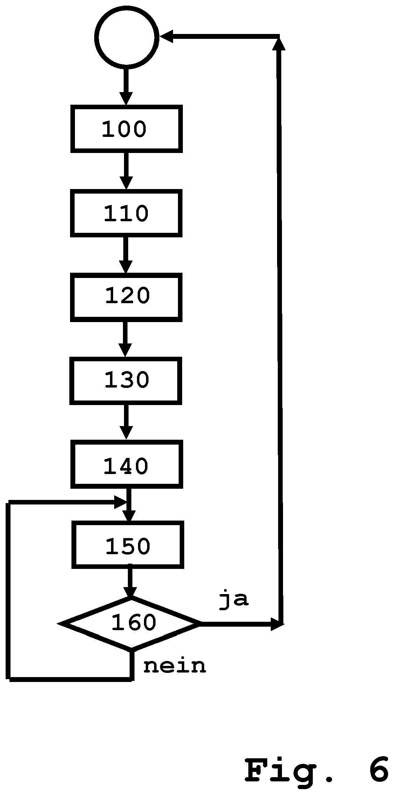

Figur 6 zeigt ein Flussdiagramm eines Ausführungsbeispiels eines erfindungsgemäßen Verfahrens. Dafür wird eine Wärmepumpe einer erfindungsgemäßen Heizungsanlage eines Fahrzeugs für das Heizen von Luft für einen und/oder in einem Fahrzeuginnenraum betrieben. Die Heizungsanlage ist beispielsweise die in Figur 1 gezeigte Heizungsanlage. Im ersten Schritt 100 werden die Daten zur Bestimmung des Heizbedarfs, wie insbesondere die Temperaturen von Außenluft und Luft des Fahrzeuginnenraums mit geeigneten Sensoren ermittelt. Im zweiten Schritt 110 wird die Höhe des Heizbedarfs für die Heizbedingungen anhand der im ersten Schritt 100 festgestellten Daten ermittelt. Sofern ein Heizbedarf besteht, wird anhand des im Schritt 110 ermittelten Heizbedarfs im dritten Schritt 120 die Soll-Leistungsverteilung der Übertragung von Wärmeleistung im ersten Heiz-Wärmeübertrager zur Übertragung von Wärmeleistung im zweiten Heiz-Wärmeübertrager bestimmt. Dieses erfolgt vor allem im Bezug auf einen optimalen Heizkomfort sowie eine gute Verteilung der Heizwärme. Deshalb sollte der Anteil der im ersten Heiz-Wärmeübertrager vom Kältemittel an das wärmespeicherfähige erste Medium im Heizkreislauf übertragenen Wärmeleistung möglichst groß sein, aber die Effektivität des Kälteprozesses dennoch nicht zu sehr herabgesetzt sein. Eine Soll-Leistungsverteilung im Teillastbereich bei ca. 0 °C wäre beispielsweise 61 % Wärmeleistung im ersten Heiz-Wärmeübertrager zu 39 % Wärmeleistung im zweiten Heiz-Wärmeübertrager. Im folgenden Schritt 130 wird der für die Wärmepumpe wirkungsgradoptimierte Wert (Opt-HD) für den Hochdruck im Kältemittelkreislauf erfasst, also der Hochdruck, bei dem die Wärmepumpe am effektivsten mit der besten Leistungszahl COP läuft. Das Erfassen 130 des wirkungsgradoptimierten Werts (Opt-HD) erfolgt durch ein Ablesen aus einer gespeicherten Tabelle von für jeweilige Außenlufttemperatur vorbestimmten wirkungsgradoptimierten Werten. Denkbar ist auch eine Ausführung, bei der die Erfassung 130 des wirkungsgradoptimierten Werts (Opt-HD) durch ausrechnen aus den momentanen Heiz- und Anlagenbedingungen erfolgt.

Der Hochdruck des Kältemittels CO2 auf der Hochdruckseite des Kältemittelkreislaufs wird im nächsten Schritt 140 durch entsprechendes Steuern beispielsweise der Leistung des Verdichters und/oder der Größe der Durchlassöffnung des regelbaren Expansionsorgans auf den wirkoptimierten Wert gebracht und dabei überkritisch betrieben. Im folgenden Schritt 150 wird der Hochdruck des Kältemittels über die Regelung gesteuert um ein Stück von beispielsweise 1 bar erhöht. Danach wird im Schritt 160 verglichen, ob die Leistungsverteilung der im ersten und zweiten Heiz-Wärmeübertrager übertragenen Wärmeleistung der Soll-Leistungsverteilung entspricht, also "ja", oder nicht, also "nein". Dieses erfolgt mit Hilfe von geeigneten Sensoren wie zum Beispiel Druck- und Temperatursensoren für das Kältemittel. Sofern das Ergebnis im Schritt 160 negativ, also "nein", ist, wird wieder im Schritt 150 der Hochdruck des Kältemittels über die Regelung gesteuert um ein Stück erhöht und wieder im Schritt 160 verglichen, ob die Leistungsverteilung der im ersten und zweiten Heiz-Wärmeübertrager übertragenen Wärmeleistung der der Soll-Leistungsverteilung entspricht, also "ja", oder nicht, also "nein". Die Schritte 150 und 160 werden so oft wiederholt, bis die Leistungsverteilung der im ersten und zweiten Heiz-Wärmeübertrager übertragenen Wärmeleistung der der Soll-Leistungsverteilung entspricht, also "ja" im Schritt 160. Daraufhin wird das Verfahren an den Anfang gesetzt und beginnt mit Schritt 100 nach einer vorgegebenen Zeitspanne von zum Beispiel 10 Sekunden erneut durchzulaufen.

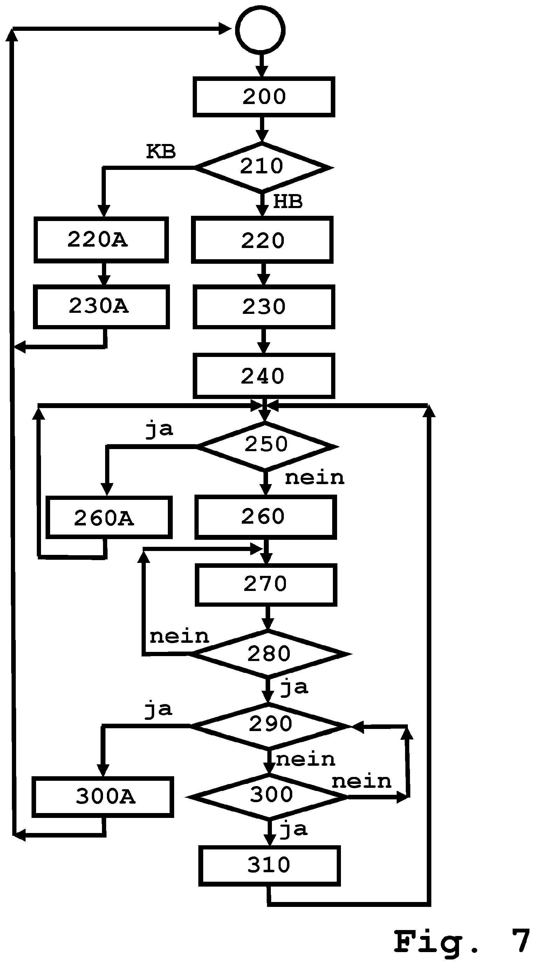

In Figur 7 ist ein Flussdiagramm eines weiteren Ausführungsbeispiels eines erfindungsgemäßen Verfahrens gezeigt. Dafür wird eine Wärmepumpe einer erfindungsgemäßen Heizungsanlage eines Fahrzeugs für das Heizen von Luft für einen und/oder in einem Fahrzeuginnenraum betrieben. Die Heizungsanlage ist beispielsweise die in Figur 3 gezeigte Heizungsanlage. Denkbar ist dafür auch die in Figur 2 dargestellte Heizungsanlage 1, wobei zusätzlich der Verdichter in der Verdichtungsrichtung umkehrbar ausgebildet ist.

Im ersten Schritt 200 werden die Daten zur Bestimmung des Kühl- oder Heizbedarfs, wie insbesondere die Temperaturen von Außenluft und Luft des Fahrzeuginnenraums mit geeigneten Sensoren ermittelt. Im zweiten Schritt 210 wird anhand der in Schritt 200 ermittelten Daten von der Regelung geprüft, ob Heizbedarf oder Kühlbedarf besteht. Sofern Kühlbedarf "KB" besteht, wird im Schritt 220A die Regelung die Heizungsanlage auf Klimabetrieb des Kältemittelkreislaufs schalten, sodass der Außenwärmetauscher als Gaskühler fungiert und zumindest ein Heiz-Wärmeübertrager als Verdampfer arbeitet. Die Heizungsanlage läuft dann als Klimaanlage zum Kühlen von Luft für den und/oder in dem Fahrzeuginnenraum. Im Schritt 230A wird die Leistung des Klimabetriebs der Heizungsanlage an den ermittelten Kühlbedarf durch Steuern mittels der Regelung angepasst. Nach einer vorgegebenen Zeitspanne von beispielsweise einer Minute wird das Verfahren wieder vom Schritt 230A zum Schritt 200 zurückgesetzt und beginnt erneut. Falls jedoch im Schritt 210 festgestellt wird, dass ein Heizbedarf "HB" besteht, wird im nächsten Schritt 220 von der Regelung der Kältemittelkreislauf der Heizungsanlage auf Wärmepumpenbetrieb geschaltet. Im folgenden Schritt 230 wird anhand des ermittelten Heizbedarfs einschließlich der festgestellten Außenlufttemperatur die Soll-Leistungsverteilung der Übertragung von Wärmeleistung vom Kältemittel im ersten Heiz-Wärmeübertrager zur Übertragung von Wärmeleistung vom Kältemittel im zweiten Heiz-Wärmeübertrager bestimmt. Dieses erfolgt vor allem in Bezug auf einen optimalen Heizkomfort sowie eine gute Verteilung der Heizwärme sowie hinsichtlich einer optimierten Speichernutzung des thermischen Speichers. Deshalb sollte der Anteil der im ersten Heiz-Wärmeübertrager vom Kältemittel an das erste Medium im Heizkreislauf übertragenen Wärmeleistung möglichst groß sein, aber die Effektivität des Kälteprozesses nicht zu sehr herabgesetzt sein. Eine Soll-Leistungsverteilung der Wärmeleistung im Teillastbereich bei ca. 0 °C wäre beispielsweise 71 % im ersten Heiz-Wärmeübertrager zu 29% im zweiten Heiz-Wärmeübertrager. Im nächsten Schritt 240 wird der für die Wärmepumpe wirkungsgradoptimierte Wert (Opt-HD) für den Hochdruck im Kältemittelkreislauf erfasst, also der Hochdruck, bei dem die Wärmepumpe am effektivsten mit der besten Leistungszahl COP läuft.

Das Erfassen 240 des wirkungsgradoptimierten Werts (Opt-HD) erfolgt durch ausrechnen aus den momentanen Heiz- und Anlagenbedingungen. Denkbar ist auch eine Ausführung, bei der die Erfassung 240 des wirkungsgradoptimierten Werts (Opt-HD) durch ablesen aus einer gespeicherten Tabelle von für jeweilige Außenlufttemperatur vorbestimmten wirkungsgradoptimierten Werten erfolgt.

Im nächsten Schritt 250 wird geprüft, ob der thermische Speicher noch gespeicherte Wärme zum ausreichenden Heizen der Luft des Fahrzeuginnenraums enthält. Dieses ist insbesondere der Fall, wenn die Temperatur des Wärmespeichermediums des thermischen Speichers über einer vorgegebenen Maximaltemperatur von beispielsweise 70 °C liegt. Falls der thermische Speicher noch gespeicherte Wärme zum ausreichenden Heizen der Luft des Fahrzeuginnenraums enthält, also das Ergebnis "ja" ist, wird im Schritt 260A der Verdichter der Wärmepumpe der Heizungsanlage ausgeschaltet beziehungsweise ausgeschaltet gelassen und die im Wärmespeichermedium des thermischen Speichers gespeicherte Wärme solange an das im Heizkreislauf als Wärmetransportmedium zirkulierende erste Medium abgegeben, bis die gesamte gespeicherte Wärme durch die Konvektion in den Konvektoren und gegebenenfalls durch Abgabe in einem Wärmeübertrager einer Frontbox an die Luft des Fahrzeuginnenraums übertragen ist. Danach kehrt das Verfahren wieder zum Schritt 250 zurück. Wenn im Schritt 250 festgestellt wird, dass der thermische Speicher keine gespeicherte Wärme zum ausreichenden Heizen der Luft des Fahrzeuginnenraums enthält, also das Ergebnis "nein" ist, wird im nächsten Schritt 260 der Verdichter des Kältemittelkreislaufs der Wärmepumpe angestellt beziehungsweise bleibt angestellt und der Hochdruck des Kältemittels wird durch entsprechendes Einstellen der Leistung des Verdichters und/oder der Kältemittelmenge im für den Wärmepumpenbetrieb aktiven Teil des Kältemittelkreislaufs erst einmal auf den wirkungsgradoptimierten Wert (Opt-HD) gebracht. Das Kältemittel wird dabei auf der Hochdruckseite des Kältemittelkreises überkritisch betrieben. Es ist beispielsweise CO2 oder ein anderes für den überkritischen Betrieb geeignetes Kältemittel. Solange die an die Luft des Fahrzeuginnenraums abgegebene Heizleistung der Wärmepumpe über dem Heizbedarf liegt, wird vorrangig die Leistung des Verdichters verringert. Es wird erst, wenn bei niedrigster Leistung des laufenden Verdichters die an die Luft des Fahrzeuginnenraums abgegebene Heizleistung weiterhin über dem Heizbedarf liegt, im nächsten Schritt 270 der Hochdruck des Kältemittels im Kältemittelkreislauf ein vorgegebenes Stück von zum Beispiel 1 bar erhöht, sodass er über dem wirkoptimierten Wert (Opt-HD) liegt. Im folgenden Schritt 280 wird mittels beispielsweise Druck- und Temperatursensoren im Hochdruckbereich des Kältemittelkreislaufs geprüft, ob die Leistungsverteilung der Übertragung von Wärmeleistung im ersten Heiz-Wärmeübertrager zur Übertragung von Wärmeleistung im zweiten Heiz-Wärmeübertrager der Soll-Leistungsverteilung entspricht. Falls dieses noch nicht der Fall ist, also das Ergebnis "nein" ist, springt das Verfahren zum Schritt 270 zurück und die Regelung steuert die Kältemittelmenge so, dass der Hochdruck um ein weiteres bar erhöht wird. Das Verfahren führt die Schritte 270 und 280 so oft durch, bis der erhöhte Hochdruck so hoch ist, dass die Leistungsverteilung der Übertragung von Wärmeleistung im ersten Heiz-Wärmeübertrager zur Übertragung von Wärmeleistung im zweiten Heiz-Wärmeübertrager der Soll-Leistungsverteilung entspricht, also das Ergebnis "ja" ist. Darauf fährt das Verfahren mit dem Schritt 290 fort, indem es nach einer vorgegebenen Zeitspanne von beispielsweise zehn Sekunden prüft, ob eine Überhitzung des Fahrzeuginnenraums vorhanden ist. Bei festgestellter Überhitzung also "ja" wird der Verdichter im Schritt 300A ausgestellt, und das Verfahren beginnt mit Schritt 200 nach einer vorgegebenen Zeitspanne neu zu laufen.

Wird jedoch im Schritt 290 keine Überhitzung des Fahrzeuginnenraums festgestellt, also "nein", folgt der Schritt 300, in dem geprüft wird, ob der thermische Speicher zu 100% mit Wärme beladen ist. Sofern die Abfrage negativ ist, also "nein" wird das Verfahren zum Schritt 290 zurückgesetzt und läuft von dort nach der vorgegebenen Zeitspanne wieder weiter durch. Andernfalls, also beim positiven Ergebnis "ja" im Schritt 300, wird im Schritt 310 der Verdichter des Kältemittelkreislaufs der Wärmepumpe abgestellt und das Verfahren kehrt zum Schritt 250 zurück und heizt im Schritt 260A mit dem vollen thermischen Speicher die Luft des Fahrzeuginnenraums bis zur Entleerung des thermischen Speichers mit der gespeicherten Wärme des thermischen Speichers.

## Patentansprüche

1. Verfahren zum Betreiben einer Wärmepumpe (3) einer Heizungsanlage (1) eines Fahrzeugs (61) für das Heizen von Luft für einen und/oder in einem Fahrzeuginnenraum (63), wobei die Wärmepumpe (3) einen Kältemittelkreislauf (5) mit zumindest
- einem Verdichter (7),
- einem ersten hochdruckseitigen Heiz-Wärmeübertrager (9) zum Übertragen von Wärme von dem Kältemittel auf ein wärmespeicherfähiges erstes Medium,
- einem zweiten hochdruckseitigen Heiz-Wärmeübertrager (11) zum Übertragen von Wärme von dem Kältemittel entweder direkt auf zu heizende Luft oder über ein gegebenenfalls zweites Medium indirekt auf zu heizende Luft,
- einem Expansionsorgan (13), und
- einem Verdampfer (15), aufweist,
wobei der erste Heiz-Wärmeübertrager (9) im Kältemittelkreislauf (5) stromaufwärts des zweiten Heiz-Wärmeübertragers (11) angeordnet ist, sodass die Temperatur des Kältemittels im ersten Heiz-Wärmeübertrager (9) über der im zweiten Heiz-Wärmeübertrager (11) liegt, und das Kältemittel im Kältemittelkreislauf (5) hochdruckseitig überkritisch betrieben wird sowie der Hochdruck im Kältemittelkreislauf (5) regelbar ist,
**gekennzeichnet durch** die Schritte:
(a) Erfassen (130, 240) eines für die Wärmepumpe (3) wirkungsgradoptimierten Werts (Opt-HD) für den Hochdruck im Kältemittelkreislauf (5),
(b) Erhöhen (150, 270) des Hochdrucks im Kältemittelkreislauf (5) über den wirkungsgradoptimierten Wert (Opt-HD) des Hochdrucks, und
(c) Erreichen (160, 280) eines erhöhten Hochdrucks, bei dem die Leistungsverteilung der Übertragung von Wärmeleistung im ersten Heiz-Wärmeübertrager (9) zur Übertragung von Wärmeleistung im zweiten Heiz-Wärmeübertrager (11) einer Soll-Leistungsverteilung entspricht.

2. Verfahren nach Anspruch 1 **dadurch gekennzeichnet, dass** das erste Medium auch eine Wärmetransportflüssigkeit, wie insbesondere Wasser, ist, die in einem Heizkreislauf (19) zirkuliert, der für das Heizen von Luft für einen und/oder in einem Fahrzeuginnenraum (63) vorgesehen ist.

3. Verfahren nach Anspruch 1 oder 2 **dadurch gekennzeichnet, dass** zumindest ein Teil der am ersten Heiz-Wärmeübertrager (9) vom Kältemittel übertragenen Wärme direkt oder über das erste Medium indirekt auf ein Phasenwechselmaterial umfassendes Wärmespeichermedium eines thermischen Speichers (29) übertragen wird, sofern dessen Maximum an zu speichernder Wärme nicht erreicht ist und die in dem ersten Heiz-Wärmeübertrager (9) zu übertragene Wärmeleistung momentan nicht vollständig für das Heizen von zu heizender Luft über das erste Medium genutzt werden soll.

4. Verfahren nach Anspruch 3 **dadurch gekennzeichnet, dass** Wärme aus dem thermischen Speicher (29) zum Heizen von Luft für einen und/oder in einem Fahrzeuginnenraum (63) dann freigegeben wird, wenn die gespeicherte Wärme über einem Minimalwert liegt und gefordert ist, dass mit der Freigabe der gespeicherten Wärme das Heizen durch die Wärmepumpe (3) unterstützt oder ersetzt werden soll.

5. Verfahren nach Anspruch 4 **dadurch gekennzeichnet, dass** bei einer höheren Temperatur des Wärmespeichermediums des thermischen Speichers (29) als eine vorgegebene Maximaltemperatur nur noch Wärme aus dem thermischen Speicher (29) zum Heizen von Luft für einen und/oder in einem Fahrzeuginnenraum (63) freigegeben wird und der Verdichter (7) der Wärmepumpe (3) ausgeschaltet wird/bleibt.

6. Verfahren nach Anspruch 4 oder 5 **dadurch gekennzeichnet, dass** die Wärme aus dem thermischen Speicher (29) an das erste Medium abgegeben wird und über das erste Medium zum Heizen von Luft für einen und/oder in einem Fahrzeuginnenraum (63) transportiert wird.

7. Verfahren nach einem der Ansprüche 3 bis 6 **dadurch gekennzeichnet, dass** je geringer der Heizbedarf für den Fahrzeuginnenraum (63) ist, desto größer bei Betrieb der Wärmepumpe (9) der Anteil der im ersten Heiz-Wärmeübertrager (9) vom Kältemittel übertragenen Wärmeleistung ist, dessen Wärme im Wärmespeichermedium des thermischen Speichers (29) gespeichert wird.

8. Verfahren nach einem der Ansprüche 1 bis 7 **dadurch gekennzeichnet, dass** bei Betrieb der Wärmepumpe (3) das Kältemittel im ersten Heiz-Wärmeübertrager (9) über einer Temperatur von 45 °C gehalten wird.

9. Verfahren nach einem der Ansprüche 1 bis 8 **dadurch gekennzeichnet, dass** bei Betrieb der Wärmepumpe (3) das Kältemittel im zweiten Heiz-Wärmeübertrager (11) unter einer Temperatur von 50 °C gehalten wird.

10. Verfahren nach einem der Ansprüche 1 bis 9 **dadurch gekennzeichnet, dass** es bei der Wärmepumpe (3) im Teillastbereich, also bei Außenlufttemperaturen zwischen - 5 °C und 12 °C, betrieben wird.

11. Verfahren nach einem der Ansprüche 1 bis 10 **dadurch gekennzeichnet, dass**, wenn die Heizleistung der Wärmepumpe (3) für den Fahrzeuginnenraum (63) über dem Heizbedarf dafür liegt, vorrangig die Leistung des Verdichters (7) verringert wird und nachrangig zumindest die Schritte (b) und (c) des Verfahrens nach Anspruchs 1 durchgeführt werden, erst wenn die kleineste Leistung des laufenden Verdichters (7) bereits erreicht ist.

12. Verfahren nach einem der Ansprüche 1 bis 11 **dadurch gekennzeichnet, dass** bei der Soll-Leistungsverteilung bei Betrieb der Wärmepumpe (3) im Teillastbereich die übertragene Wärmeleistung im ersten Heiz-Wärmeübertrager (9) mindestens 60%, vorzugsweise mindestens 70%, der gesamten vom Kältemittel abgegebenen Wärmeleistung beträgt.

13. Heizungsanlage (1) für ein Fahrzeug (61) mit einer Wärmepumpe (3) für das Heizen von Luft für einen und/oder in einem Fahrzeuginnenraum (63), wobei die Wärmepumpe (3) einen Kältemittelkreislauf (5) mit zumindest
- einem Verdichter (7),
- einem ersten hochdruckseitigen Heiz-Wärmeübertrager (9) zum Übertragen von Wärme von dem Kältemittel auf ein wärmespeicherfähiges erstes Medium,
- einem zweiten hochdruckseitigen Heiz-Wärmeübertrager (11) zum Übertragen von Wärme von dem Kältemittel entweder direkt auf zu heizende Luft oder indirekt über ein gegebenenfalls zweites Medium auf zu heizende Luft,
- einem Expansionsorgan (13), und
- einem Verdampfer (15), aufweist,
wobei der erste Heiz-Wärmeübertrager (9) im Kältemittelkreislauf (5) stromaufwärts des zweiten Heiz-Wärmeübertragers (11) angeordnet ist und das Kältemittel im Kältemittelkreislauf (5) hochdruckseitig überkritisch betreibbar ist sowie der Hochdruck im Kältemittelkreislauf (5) regelbar ist, **dadurch gekennzeichnet,**
**dass** die Heizungsanlage (1) eine Regelung (25) umfasst, die derart zum Steuern der Heizungsanlage (1) ausgebildet ist, dass damit ein Verfahren nach einem der Ansprüche 1, 8 bis 12 durchführbar ist.

14. Heizungsanlage (1) nach Anspruch 13 **dadurch gekennzeichnet, dass** sie einen an den ersten Heiz-Wärmeübertrager (9) angeschlossenen Heizkreislauf (19) mit dem ersten Medium auch als Wärmetransportflüssigkeit für das Heizen von Luft für einen und/oder in einem Fahrzeuginnenraum (63) aufweist, wobei der Heizkreislauf (19) eine Pumpe (21)
und
ein oder mehrere Konvektoren (23)
und/oder
ein oder mehrere Wärmeübertrager für den Dachbereich und/oder den Frontbereich eines Fahrzeugs (61) umfasst, und
wobei die Regelung (25) derart zum Steuern der Heizungsanlage (1) ausgebildet ist, dass damit ein Verfahren auch nach Anspruch 2 durchführbar ist.

15. Heizungsanlage (1) nach Anspruch 13 oder 14 **dadurch gekennzeichnet, dass** sie einen thermischen Speicher (29) vorgesehen und angeordnet zum Speichern von über den ersten Heiz-Wärmeübertrager (9) übertragener Wärme in einem Phasenwechselmaterial umfassendes Wärmespeichermedium umfasst, wobei die Regelung (25) derart zum Steuern der Heizungsanlage (1) ausgebildet ist, dass damit ein Verfahren auch nach einem der Ansprüche 3 bis 7 durchführbar ist.

16. Heizungsanlage (1) nach einem der Ansprüche 13 bis 15 **dadurch gekennzeichnet, dass** der Verdichter (7) in seiner Leistung hinsichtlich des Regelns des Hochdrucks im Kältemittelkreislauf (5) regelbar ist und/oder das Expansionsorgan (13) hinsichtlich des Regelns des Hochdrucks im Kältemittelkreislauf (5) regelbar ist und/oder
die Heizungsanlage (1) derart ausgebildet ist, dass das Kältemittel im Kältemittelkreislauf (5) zum Regeln des Hochdrucks im Kältemittelkreislauf (5) verlagerbar ist.

17. Heizungsanlage (1) nach einem der Ansprüche 13 bis 16 **dadurch gekennzeichnet, dass** sie derart ausgebildet ist, dass sie auch als Klimaanlage zum Kühlen von Luft für einen und/oder in einem Fahrzeuginnenraum (63) betreibbar ist, wobei der Kältemittelkreislauf (5) zwischen Wärmepumpenbetrieb und Klimabetrieb umschaltbar ausgebildet ist.

18. Fahrzeug (61), wie insbesondere ein Elektroomnibus oder Hybridomnibus, **dadurch gekennzeichnet, dass** es eine Heizungsanlage (1) nach einem der Ansprüche 13 bis 17 umfasst.

## Claims

1. Method for operating a heat pump (3) of a heating system (1) of a vehicle (61) for heating air for and/or in a vehicle interior (63), wherein the heat pump (3) comprises a refrigerant circuit (5) with at least
- a compressor (7),
- a first heating heat exchanger (9) on the high-pressure side for transferring heat from the refrigerant to a first heat-storing medium,
- a second heating heat exchanger (11) on the high-pressure side for transferring heat from the refrigerant either directly to the air to be heated, or indirectly via a second medium to air to be heated,
- an expansion member (13), and
- an evaporator (15),
wherein the first heating heat exchanger (9) is arranged upstream of the second heating heat exchanger (11) in the refrigerant circuit (5) so that the temperature of the refrigerant in the first heating heat exchanger (9) is higher than that in the second heating heat exchanger (11), and the refrigerant is operated super-critically on the high-pressure side in the refrigerant circuit (5) and the high-pressure can be regulated in the refrigerant circuit (5),
**characterized by** the steps:
(a) detecting (130, 240) a value (Opt-HD), optimized for the heat pump (3) in terms of efficiency, for the high pressure in the refrigerant circuit (5),
(b) increasing (150, 270) the high pressure in the refrigerant circuit (5) above the value (Opt-HD) optimized in terms of efficiency, of the high pressure, and
(c) reaching (160, 280) an increased high pressure at which the power distribution of the transfer of thermal power in the first heating heat exchanger (9) in relation to the transfer of thermal power in the second heating heat exchanger (11) corresponds to a target power distribution.

2. Method according to claim 1, **characterized in that** the first medium is also a heat-transporting liquid, such as water in particular, which circulates in a heating circuit (19), which is provided for heating air for and/or in a vehicle interior (63).

3. Method according to claim 1 or 2, **characterized in that** at least part of the heat transferred by the refrigerant to the first heating heat exchanger (9) is transferred directly, or indirectly via the first medium, to a heat-storing medium, comprising a phase-change material, of a heat accumulator (29) insofar as its maximum heat to be accumulated is not reached and the thermal power to be transferred in the first heating heat exchanger (9) is not to be temporarily fully utilized for heating air to be heated via the first medium.

4. Method according to claim 3, **characterized in that** heat is released from the heat accumulator (29) for heating air for and/or in a vehicle interior (63) when the accumulated heat is above a minimum value and it is requested that heating by the heat pump (3) is to be supported or replaced with the release of the accumulated heat.

5. Method according to claim 4, **characterized in that** at a temperature of the heat-storing medium of the heat accumulator (29) higher than a predefined maximum temperature, only heat from the heat accumulator (29) is still released for heating air for and/or in a vehicle interior (63) and the compressor (7) of the heat pump (3) is/remains deactivated.

6. Method according to claim 4 or 5, **characterized in that** the heat from the heat accumulator (29) is released to the first medium and is transported via the first medium for heating air for and/or in a vehicle interior (63).

7. Method according to any one of claims 3 to 6, **characterized in that** the lower the heating requirement for the vehicle interior (63), the greater the fraction of the thermal power transferred by the refrigerant in the first heating heat exchanger (9), the heat of which is stored in the heat-storing medium of the heat accumulator (29) during operation of the heat pump (9).

8. Method according to any one of claims 1 to 7, **characterized in that** the refrigerant in the first heating heat exchanger (9) is kept above a temperature of 45°C during operation of the heat pump (3).

9. Method according to any one of claims 1 to 8, **characterized in that** the refrigerant in the second heating heat exchanger (11) is kept below a temperature of 50°C during operation of the heat pump (3).

10. Method according to any one of claims 1 to 9, **characterized in that** it is operated with the heat pump (3) in the partial load range, i.e. at outside air temperatures between -5°C and 12°C.

11. Method according to any one of claims 1 to 10, **characterized in that**, when the heating power of the heat pump (3) for the vehicle interior (63) is greater than the heating requirement for this purpose, the power of the compressor (7) is reduced in a prioritized manner and, with a lower priority, at least steps (b) and (c) of the method according to claim 1 are carried out not before reaching the lowest power of the compressor (7) during operation.

12. Method according to any one of claims 1 to 11, **characterized in that** for the target power distribution, when the heat pump (3) is operated in the partial load range, the transferred thermal power in the first heating heat exchanger (9) is at least 60%, preferably at least 70%, of the total thermal power released by the refrigerant.

13. Heating system (1) for a vehicle (61), comprising a heat pump (3) for heating air for and/or in a vehicle interior (63), wherein the heat pump (3) comprises a refrigerant circuit (5) with at least
- a compressor (7),
- a first heating heat exchanger (9) on the high-pressure side for transferring heat from the refrigerant to a first heat-storing medium,
- a second heating heat exchanger (11) on the high-pressure side for transferring heat from the refrigerant either directly to the air to be heated, or indirectly via a second medium to the air to be heated,
- an expansion member (13), and
- an evaporator (15),
in which the first heating heat exchanger (9) is arranged upstream of the second heating heat exchanger (11) in the refrigerant circuit (5) and the refrigerant can be operated super-critically on the high-pressure side in the refrigerant circuit (5) and the high-pressure can be regulated in the refrigerant circuit (5), **characterized in that**
the heating system (1) comprises a controller (25) which is configured to control the heating system (1) in such a way that a method according to any one of claims 1, 8 to 12 can be performed.

14. Heating system (1) according to claim 13, **characterized in that** it comprises a heating circuit (19) connected to the first heating heat exchanger (9) with the first medium also as a heat-transporting liquid for heating air for and/or in a vehicle interior (63), wherein the heating circuit (19) comprises a pump (21)
and
one or more convectors (23)
and/or
one or more heat exchangers for the roof area and/or front area of a vehicle (61), and
wherein the controller (25) is configured to control the heating system (1) in such a way that a method in accordance with claim 2 can also be carried out thereby.

15. Heating system (1) according to claim 13 or 14, **characterized in that** it comprises a heat accumulator (29) intended and arranged to accumulate heat transferred via the first heating heat exchanger (9) in a heat-storing medium comprising a phase-change material, wherein the controller (25) is configured in such a way to control the heating system (1) that a method according to any one of claims 3 to 7 can also be carried out thereby.

16. Heating system (1) according to any one of claims 13 to 15, **characterized in that** the power of the compressor (7) can be regulated with regard to the regulation of the high pressure in the refrigerant circuit (5) and/or the expansion member (13) can be regulated with regard to the regulation of the high pressure in the refrigerant circuit (5),
and/or
the heating system (1) is configured in such a way that the refrigerant in the refrigerant circuit (5) can be displaced to regulate the high pressure in the refrigerant circuit (5) .

17. Heating system (1) according to any one of claims 13 to 16, **characterized in that** it is configured in such a way that it can also be operated as an air-conditioning system for cooling air for and/or in a vehicle interior (63), wherein the refrigerant circuit (5) is configured in such a way that it can be switched over between a heat pump operating mode and an air-conditioning operating mode.

18. Vehicle (61), such as in particular an electric bus or a hybrid bus, **characterized in that** it comprises a heating system (1) according to any one of claims 13 to 17.

## Revendications

1. Procédé pour faire fonctionner une pompe à chaleur (3) d'une installation de chauffage (1) d'un véhicule (61) pour le chauffage d'air pour un et/ou dans un habitacle de véhicule (63), dans lequel la pompe à chaleur (3) présente un circuit frigorifique (5) avec au moins
- un compresseur (7),
- un premier échangeur de chaleur de chauffage (9) côté haute pression destiné à transférer de la chaleur provenant du fluide frigorigène sur un premier agent capable de stocker de la chaleur,
- un deuxième échangeur de chaleur de chauffage (11) côté haute pression destiné à transférer de la chaleur provenant du fluide frigorigène soit directement sur de l'air à chauffer soit indirectement par l'intermédiaire d'un éventuellement deuxième agent sur de l'air à chauffer,
- un organe d'expansion (13), et
- un évaporateur (15),
dans lequel le premier échangeur de chaleur de chauffage (9) est disposé en amont du deuxième échangeur de chaleur de chauffage (11) dans le circuit frigorifique (5) si bien que la température du fluide frigorigène dans le premier échangeur de chaleur de chauffage (9) est supérieure à celle dans le deuxième échangeur de chaleur de chauffage (11), et le fluide frigorigène fonctionne de manière surcritique côté haute pression dans le circuit frigorifique (5) et la haute pression peut être régulée dans le circuit frigorifique (5),
**caractérisé par** les étapes :
(a) de détection (130, 240) d'une valeur à degré d'action optimisé (Opt-HD) pour la pompe à chaleur (3) pour la haute pression dans le circuit frigorifique (5),
(b) d'augmentation (150, 270) de la haute pression dans le circuit frigorifique (5) au-dessus de la valeur à degré d'action optimisé (Opt-HD) de la haute pression, et
(c) d'atteinte (160, 280) d'une haute pression augmentée, à laquelle la répartition de puissance du transfert de la puissance thermique dans le premier échangeur de chaleur de chauffage (9) par rapport au transfert de la puissance thermique dans le deuxième échangeur de chaleur de chauffage (11) correspond à une répartition de puissance cible.

2. Procédé selon la revendication 1, **caractérisé en ce que** le premier agent est également un liquide de transport de chaleur, comme en particulier de l'eau, qui circule dans un circuit de chauffage (19), qui est prévu pour le chauffage d'air pour un et/ou dans un habitacle de véhicule (63).

3. Procédé selon la revendication 1 ou 2, **caractérisé en ce qu'**au moins une partie de la chaleur transférée par le fluide frigorigène sur le premier échangeur de chaleur de chauffage (9) est transférée directement ou indirectement par l'intermédiaire du premier agent sur un agent accumulateur de chaleur, comprenant un matériau à changement de phase, d'un accumulateur thermique (29) dans la mesure où son maximum en chaleur à accumuler n'est pas atteint et la puissance thermique à transférer dans le premier échangeur de chaleur de chauffage (9) ne doit pas être utilisée temporairement totalement pour le chauffage d'air à chauffer par l'intermédiaire du premier agent.

4. Procédé selon la revendication 3, **caractérisé en ce que** de la chaleur est libérée de l'accumulateur thermique (29) pour chauffer de l'air pour un et/ou dans un habitacle de véhicule (63) lorsque la chaleur accumulée est supérieure à une valeur minimale et qu'il est demandé que le chauffage par la pompe à chaleur (3) doive être soutenu ou remplacé avec la libération de la chaleur accumulée.

5. Procédé selon la revendication 4, **caractérisé en ce qu'**à une température de l'agent accumulateur de chaleur de l'accumulateur thermique (29) plus élevée qu'une température maximale prédéfinie, seule de la chaleur provenant de l'accumulateur thermique (29) est encore libérée pour chauffer de l'air pour un et/ou dans un habitacle de véhicule (63) et le compresseur (7) de la pompe à chaleur (3) est/reste désactivé.

6. Procédé selon la revendication 4 ou 5, **caractérisé en ce que** la chaleur provenant de l'accumulateur thermique (29) est fournie au premier agent et est transportée par l'intermédiaire du premier agent pour chauffer de l'air pour un et/ou dans un habitacle de véhicule (63).

7. Procédé selon l'une quelconque des revendications 3 à 6, **caractérisé en ce que** plus le besoin de chauffage est faible pour l'habitacle de véhicule (63), plus la fraction de la puissance thermique transférée par le fluide frigorigène dans le premier échangeur de chaleur de chauffage (9), dont la chaleur est accumulée dans l'agent accumulateur de chaleur de l'accumulateur de chaleur (29), est importante lors du fonctionnement de la pompe à chaleur (9) .

8. Procédé selon l'une quelconque des revendications 1 à 7, **caractérisé en ce que** lors du fonctionnement de la pompe à chaleur (3), le fluide frigorigène dans le premier échangeur de chaleur de chauffage (9) est maintenu au-dessus d'une température de 45 °C.

9. Procédé selon l'une quelconque des revendications 1 à 8, **caractérisé en ce que** lors du fonctionnement de la pompe à chaleur (3), le fluide frigorigène dans le deuxième échangeur de chaleur de chauffage (11) est maintenu sous une température de 50 °C.

10. Procédé selon l'une quelconque des revendications 1 à 9, **caractérisé en ce qu'**il fonctionne avec la pompe à chaleur (3) dans la plage de charge partielle, donc à des températures de l'air extérieur entre -5 °C et 12 °C.

11. Procédé selon l'une quelconque des revendications 1 à 10, **caractérisé en ce que**, lorsque la puissance de chauffage de la pompe à chaleur (3) pour l'habitacle de voiture (63) est supérieure au besoin de chauffage à cet effet, la puissance du compresseur (7) est réduite en priorité puis au moins les étapes (b) et (c) du procédé selon la revendication 1 sont mises en oeuvre seulement lorsque la plus petite puissance du compresseur (7) en cours de fonctionnement est déjà atteinte.

12. Procédé selon l'une quelconque des revendications 1 à 11, **caractérisé en ce que** pour la répartition de puissance cible, lors du fonctionnement de la pompe à chaleur (3) dans la plage de charge partielle, la puissance thermique transférée dans le premier échangeur de chaleur de chauffage (9) est d'au moins 60 %, de préférence d'au moins 70 %, de la totalité de la puissance thermique fournie par le fluide frigorigène.

13. Installation de chauffage (1) pour un véhicule (61) avec une pompe à chaleur (3) pour le chauffage d'air pour un et/ou dans un habitacle de véhicule (63), dans laquelle la pompe à chaleur (3) présente un circuit frigorifique (5) avec au moins
- un compresseur (7),
- un premier échangeur de chaleur de chauffage (9) côté haute pression destiné à transférer de la chaleur provenant du fluide frigorigène sur un premier agent capable d'accumuler de la chaleur,
- un deuxième échangeur de chaleur de chauffage (11) côté haute pression destiné à transférer de la chaleur provenant du fluide frigorigène soit directement sur de l'air à chauffer soit indirectement par l'intermédiaire d'un éventuellement deuxième agent sur de l'air à chauffer,
- un organe d'expansion (13), et
- un évaporateur (15),
dans laquelle le premier échangeur de chaleur de chauffage (9) est disposé en amont du deuxième échangeur de chaleur de chauffage (11) dans le circuit frigorifique (5) et le fluide frigorigène peut fonctionner de manière surcritique côté haute pression dans le circuit frigorifique (5) et la haute pression peut être régulée dans le circuit frigorifique (5), **caractérisée en ce**
**que** l'installation de chauffage (1) comprend une régulation (25), qui est réalisée de telle manière pour commander l'installation de chauffage (1) qu'ainsi un procédé selon l'une quelconque des revendications 1, 8 à 12 peut être mis en oeuvre.

14. Installation de chauffage (1) selon la
revendication 13, **caractérisée en ce qu'**elle présente un circuit de chauffage (19) connecté au premier échangeur de chaleur de chauffage (9) avec le premier agent également en tant que liquide de transport de chaleur pour le chauffage d'air pour un et/ou dans un habitacle de véhicule (63), dans laquelle le circuit de chauffage (19) comprend une pompe (21)
et
un ou plusieurs convecteurs (23)
et/ou
un ou plusieurs échangeurs de chaleur pour la zone de toit et/ou la zone avant d'un véhicule (61), et
dans laquelle la régulation (25) est réalisée de telle manière pour commander l'installation de chauffage (1) qu'ainsi un procédé également selon la revendication 2 peut être mis en oeuvre.

15. Installation de chauffage (1) selon la revendication 13 ou 14, **caractérisée en ce qu'**elle comprend un accumulateur thermique (29) prévu et disposé pour accumuler de la chaleur transférée par l'intermédiaire du premier échangeur de chaleur de chauffage (9) dans un agent accumulateur de chaleur comprenant un matériau à changement de phase, dans laquelle la régulation (25) est réalisée de telle manière pour commander l'installation de chauffage (1) qu'ainsi un procédé également selon l'une quelconque des revendications 3 à 7 peut être mis en oeuvre.

16. Installation de chauffage (1) selon l'une quelconque des revendications 13 à 15, **caractérisée en ce que** le compresseur (7) peut être régulé dans sa puissance en ce qui concerne la régulation de la haute pression dans le circuit frigorifique (5) et/ou l'organe d'expansion (13) peut être régulé **en ce que** concerne la régulation de la haute pression dans le circuit frigorifique (5) et/ou
l'installation de chauffage (1) est réalisée de telle manière que le fluide frigorigène dans le circuit frigorifique (5) peut être déplacé pour réguler la haute pression dans le circuit frigorifique (5).

17. Installation de chauffage (1) selon l'une quelconque des revendications 13 à 16, **caractérisée en ce qu'**elle est réalisée de telle manière qu'elle peut fonctionner également en tant qu'installation de climatisation pour refroidir de l'air pour un et/ou dans un habitacle de véhicule (63), dans laquelle le circuit frigorifique (5) est réalisé de manière à pouvoir être commuté entre le mode de fonctionnement en pompe à chaleur et le mode de fonctionnement en climatisation.

18. Véhicule (61), comme en particulier autobus électrique ou un autobus hybride, **caractérisé en ce qu'**il comprend une installation de chauffage (1) selon l'une quelconque des revendications 13 à 17.
